# EUROPEAN PATENT APPLICATION

(11) **EP 3 115 958 A1**
(43) Date of publication of application: **11.01.2017**
(21) Application number: 15758088.7
(22) Date of filing: 02.03.2015
(51) Int. Cl.: G06Q 40/04

(54) **SECURITIES ISSUING SYSTEM AND METHOD FOR ACQUIRING FUNDS**

(30) Priority: 07.03.2014 JP 2014044884
(71) Applicant: Sato, Michihiro, Tokyo 102-0076 (JP)
(72) Inventor: Sato, Michihiro, Tokyo 102-0076 (JP)
(74) Representative: Bockhorni & Kollegen
(86) International application number: PCT/JP2015/056040
(87) International publication number: WO 2015/133419

(57) **Abstract**

The purpose of the present invention is to issue new securities capable of allowing economic operators to acquire funds readily. A first security includes an issuing corporation issuing the security, a face value to be paid to the issuing corporation of the security in exchange for possession of the security, a redemption period of the face value, a guarantee rate defined as a ratio of a refund returned to the holder of the security by a third party involved in the issuance of the security, when an interest payment is missed and/or the issuing corporation defaults, to the face value, and an interest rate defined as a ratio of a regular interest payment to the holder of the security to the face value or a guaranteed value guaranteed at the guarantee rate. Unlike the first security, a second security includes no redemption period. A securities issuing computer (100) has processing units (102, 103, 108) for determining the interest rate and a dividend and for converting the first security into the second security after a lapse of a predetermined period since the issuance of the first security.

## Description

### TECHNICAL FIELD

The present invention relates to a securities issuing system for issuing securities that acquire funds to construct a new infrastructure or repair an existing infrastructure and to a method for acquiring funds.

### BACKGROUND ART

Patent Document 1 and Patent Document 2 describe securities for acquiring private funds, in particular, securities issued for acquiring private funds to be invested in public works such as infrastructure improvements.

Construction and operation of public facilities, such as roads and railroads, and facilities for public benefits, such as healthcare facilities and social welfare facilities, are of great concerns to the residents in the related area since such facilities are closely linked to their daily lives. Therefore, improvements in the infrastructure that affects the basics of life (basic facilities of a society), such as roads and healthcare facilities, are crucial in urban development. However, although the administrative services with such infrastructure are indispensable for the residences, not all projects are profitable.

National or local governments are required to provide the infrastructure described above to achieve urban development. However, some national or local governments are unable to allocate sufficient annual budget to public works of infrastructure improvements due to financial tightness. To solve this problem, private funds may be acquired to secure budget for infrastructure improvements.

As a means for acquiring private funds, a national or local government can issue public bonds such as national bonds and local bonds. Public and corporation bonds include government guaranteed bonds, which are issued in the private finance market and whose issuer's liabilities for the redemption of the principal and interest are fully guaranteed by the pertinent government.

Further, industrial bonds, whose issuers are private enterprises, include bonds related to a specific purpose company/specified purpose company (SPC). SPC bonds, which are related to so-called "project finance", are issued to acquire funds for performing a specific project. For example, when an enterprise constructs and operates a large building in front of a station, the enterprise issues bonds and uses the funds acquired through the bonds only for the project of "construction and operation of the station front building". In addition, in a private finance initiative (PFI), which is a method for improving social infrastructure with private funds, an enterprise that conducts public works, such as infrastructure improvements, may acquire funds by issuing similar bonds.

### PRIOR ART DOCUMENTS

### Patent Documents

Patent Document 1: Japanese Laid-Open Patent Publication No. 2002-157419
Patent Document 2: U.S. Patent No. 7,536,330

### SUMMARY OF THE INVENTION

### Problems that the Invention is to Solve

However, as for government guaranteed bonds, a national or local government that is under financial tightness would have difficulties in fulfilling the guaranteed obligations when the project fails. As for project finance bonds such as SPC and PFI, which are not guaranteed by a government, there is no guarantee for principal and interest. This may impede acquisition of sufficient funds. Further, when the redemption limit of bonds is reached, the pertinent enterprise is required to redeem the principal and thus bears significant burden.
In addition, private funds are difficult to acquire for the infrastructure improvements of unprofitable administrative services.

Stocks are another means for an enterprise to acquire funds. An enterprise issues stocks to acquire funds and stockholders, who purchase the stocks, can participate in the project of the enterprise and receive dividends. However, even when stocks are issued to increase the capital, not enough investors would purchase the stocks for fear of capital decrease or liquidation of the company, resulting from poor performance of the company.
This may prevent acquisition of sufficient funds.

Further, much infrastructure is transportation networks or buildings that require long-term maintenance. The maintenance needed after construction involve repairs and funds for the repairs.

### Means for Solving the Problems

Under the circumstances described above, it is an objective of the present invention to provide a securities issuing system for issuing new securities that allow an enterprise to easily acquire funds and a method for acquiring funds that facilitates acquisition of funds using the new securities.

It is another objective of the present invention to provide a new securities issuing system and a method for acquiring funds that can change the types and contents of securities according to the needs of investors or progress of the project.

It is yet another objective of the present invention to provide a new securities issuing system and a method for acquiring funds that can select and issue appropriate types of securities in accordance with the progress of the project.

A securities issuing system includes a securities issuing computer configured to issue securities to acquire funds for a new project to construct a new infrastructure. The securities issuing computer includes a processing unit that determines the interest rate and dividends of the securities.

The securities issuing computer issues a first security that includes a first issuing entity that issues the first security, a first face value paid to the first issuing entity in exchange for possession of the first security, a first guaranteed rate that specifies an amount returned to a security holder by at least one third party involved in issuance of the first security if the first issuing entity defaults and/or becomes unable to pay interest, wherein the first guaranteed rate is expressed as a proportion relative to the first face value, a first interest rate that specifies interest paid periodically to the security holder, wherein the first interest rate is expressed as a proportion relative to the first face value or to a guaranteed portion that is guaranteed with the first guaranteed rate, and a first dividend that is to be distributed to the security holder after the project funded through the first security begins to generate profit, wherein the first dividend is at least a portion of the profit and paid on a non-guaranteed portion other than the guaranteed portion guaranteed with the first guaranteed rate.

As long as the project operates smoothly, the investor of the first security receives the interest according to the interest rate (annual interest) and the dividends every year. When the redemption limit is reached, the amount corresponding to the first face value is returned. If the project fails and causes the enterprise to default or become unable to pay interest, the guarantor will return the guaranteed limit of X%. The first security is partially guaranteed, facilitating the acquisition of funds from investors. In addition, the guarantor is not obliged to guarantee the amount of the first face value in full and thus bears less financial burden. Further, the first security also includes the non-guaranteed portion, which encourages the security holder to actively participate in the project in hopes of success of the program. The first security is similar to bonds in that the first security has a redemption limit and pays interest.

The securities issuing computer may issue other security to acquire funds for a new project and/or a repair project to repair an existing infrastructure, which are different from the new project described above. The other security is a second security that does not have a redemption limit and includes a second issuing entity that issues the second security, a second face value paid to the second issuing entity in exchange for possession of the second security, a second guaranteed rate that specifies an amount returned to the security holder by at least one third party involved in issuance of the second security if the second issuing entity defaults and/or becomes unable to pay interest, wherein the second guaranteed rate is expressed as a proportion relative to the second face value, a second interest rate that specifies interest paid periodically to the security holder, wherein the second interest rate is expressed as a proportion relative to the second face value or to a guaranteed portion that is guaranteed with the second guaranteed rate, and a second dividend that is to be distributed to the security holder after a project funded through the second security begins to generate profit, wherein the second dividend is paid on a non-guaranteed portion other than the guaranteed portion guaranteed with the second guaranteed rate. The second security differs from the first security in that the second security does not have a redemption limit. The second security is similar to stock certificates in that the second security does not have a redemption limit and pays the second dividend. The processing unit determines the second interest rate and second dividend of the second security and issue the second security.

The first and second securities may be used to acquire funds for a new project to construct a transportation infrastructure that connects cities and a project to repair an existing infrastructure. In addition to the transportation infrastructure, the new project may further include a project to construct an additional new city between the cities. The project to construct a new city may include a project to construct a station in the new city, a project to construct a landmark in the new city, and a project to construct an educational facility, a welfare facility, and/or a healthcare facility in the new city. The project to repair an existing infrastructure includes repair of the infrastructure that is constructed in the new project, in addition to other infrastructure such as an existing road.

The first and second securities are new type of securities that include features of bonds and stock certificates. The first and second securities are similar to bonds in that they pay interest and similar to stock certificates in that they pay dividends. The first security is similar to bonds in that it has a redemption limit, and the second security is similar to stock certificates in that it does not have a redemption limit. Although the second security is similar to stock certificates in that it does not have a redemption limit, the second security differs from stock certificates in that it does not grant the security holder a position equivalent to those of stockholders.

The first and second securities may be used to acquire funds for a large-scale project including a new project and an infrastructure repair project. The enterprise can use the acquired funds freely for the various projects that constitute the new large-scale project within the scope of the new large-scale project. Since the purpose of the funds acquired through the first and second securities is clear, the investors can monitor whether the funds are used within the scope of the purpose.

The first and second securities may be further classified by purpose compared to the examples described above. That is, in addition to issuing securities to acquire funds for a project to construct a new transportation infrastructure, another type of first securities may be issued to acquire funds for a new project to construct an additional new city between the cities.

Contents of the first and second securities and description of the project for which funds are acquired are presented in a TV shopping program. When receiving purchase order data sent from a digital television receiver that shows the TV shopping program, the securities issuing unit of the securities issuing system issues the first or second security corresponding to the purchase order to an investor who is a viewer.

The securities issuing system includes a securities issuing computer that issues a first security that raise funds for a new project to construct a new infrastructure. The securities issuing computer includes a processing unit that determines the first interest rate and the first dividend. The processing unit issues the first security and, when a predetermined time has elapsed since issuance of the first security, executes a process for converting the first security into a second security that differs from the first security in type. The first security may or may not have a redemption limit. However, the first security preferably has a redemption limit.

For example, the processing unit is configured to execute conversion into the second security of a different type when the redemption limit is reached. Further, the processing unit is configured to execute the process for converting the first security of the security holder into the second security of a different type if the processing unit receives, from an investor computer, conversion right exercise data that gives instructions for the first security to be converted into the second security of a different type, and execute a process for redeeming the first security of the investor if the processing unit does not receive the conversion right exercise data.

The second security has the second guaranteed rate that is 0%, pays the second dividend, and curries the second interest rate that is 0% or differs from the first interest rate of the first security. The second security may be converted into a plurality of securities including a security that guarantees the amount of the guaranteed portion in full and carries the second interest rate, and a security that does not guarantee the amount of the non-guaranteed portion and pays the second dividend. The security of a different type may be a stock certificate. The stock certificate may be a normal (conventional) stock certificate. Alternatively, the amount corresponding to a predetermined proportion relative to the face value of the stock certificate or to the market price at the time of conversion from the first security may be guaranteed for the stock certificate by at least one third party involved in issuance of the second security.

The processing unit may be configured to change the first interest rate and/or the first guaranteed rate when the predetermined time has elapsed since the issuance of the first security.

The securities issuing system includes a securities issuing computer that issues a first security for acquiring funds for a new project to construct a new infrastructure and a second security for acquiring funds for a repair project to repair an existing infrastructure. At least the first and second securities described above are issued. The securities issuing computer includes a processing unit that is configured to determine the first interest rate and the first dividend of the first security, issue the first security, determine the second interest rate and the second dividend of the second security, and issue the second security. The processing unit may be configured to issue the second security after issuance of the first security. For example, the second security for a repair project of the infrastructure constructed in the new project may be issued after issuance of the first security.

The processing unit may be configured to assess, before the redemption limit of the first security is reached, whether to issue the first security or the second security as an additional security. In this case, the processing unit may be configured to output, before the redemption limit of the first security is reached, a notification prompting entry of information required to assess whether to issue the first security or the second security as the additional security. For example, the processing unit may be configured to select the second security, which does not have a redemption limit, if the infrastructure that is repaired is a long-term or permanent facility, and select the first security, which has a redemption limit, if the infrastructure that is repaired is a short-term facility. The processing unit may be configured to issue the second security after issuance of the first security if the processing unit determines that the second security is to be issued. The processing unit may be configured to issue the first security in place of or together with the second security after the issuance of the first security if the processing unit determines to issue the first security.

The present invention relates to a method for acquiring funds using the securities issuing system described above. The securities issuing system and the method for acquiring funds are achieved by installing a computer program in a computer system.

### EFFECTS OF THE INVENTION

According to the present invention, the processing unit issues a first security and, when a predetermined time has elapsed since issuance of the first security, executes a process for converting the first security into a second security that differs from the first security in type. As a result, the original first security is extinguished and leaves a converted security. This allows the investor to secure a stable cash flow as the security holder before converting the first security and then receive the interest and dividend after the conversion according to the contents after conversion. This gives the investor more flexibility in investment. If a security is converted into a first security, which does not have a redemption limit, the enterprise does not have to pay the amount of the face value to the investor upon redemption and thus bears less financial burden. As such, the present invention allows the types and contents of securities to be changed according to the needs of enterprises and investors.

According to the present invention, second securities, which do not have a redemption limit, are issued after first securities, which have a redemption limit, are issued. Thus, the funds for construction of a new infrastructure may be acquired through first securities, which have a redemption limit, and funds for repair may be acquired through second securities, which do not have a redemption limit. Since the second securities do not have a redemption limit, the issuer pays the second interest and the second dividend to the investor but does not have to pay the amount of the face value to the investors. This lightens the financial burden. As such, the present invention allows the types and contents of securities to be changed according to the needs of enterprises and investors.

### BRIEF DESCRIPTION OF THE DRAWINGS

Fig. 1 is a diagram showing the structure of a first security.
Fig. 2 is a diagram showing the first security.
Fig. 3 is a diagram showing the structure of a second security.
Fig. 4 is a diagram showing the second security.
Fig. 5 is a diagram showing a route plan of the California high-speed railroad.
Fig. 6 is a diagram showing a project of the California high-speed railroad that uses first securities.
Fig. 7 is a diagram showing a first security that raises funds for the California high-speed railroad and development along the railroad.
Fig. 8 is a diagram showing a project flow and cash flow in issuance of one type of first securities used to acquire funds for the California high-speed railroad and development along the railroad.
Fig. 9 is a diagram showing a first security that raises funds for the construction of California high-speed railroad and new cities A to C.
Fig. 10 is a diagram showing the project flow and cash flow in issuance of four types of first securities used to acquire funds for the construction of the California high-speed railroad and new cities A to C.
Fig. 11 is a diagram showing first securities that are further classified by purpose and issued for the development of the new city A.
Fig. 12 is a diagram showing first securities that are further classified by purpose and issued for the development of the new city B.
Fig. 13 is a diagram showing first securities that are further classified by purpose and issued for the development of the new city C.
Fig. 14 is a diagram showing a second security used for the renovation of a municipal stadium.
Fig. 15 is a diagram showing a second security for repair of the California high-speed railroad.
Fig. 16 is a diagram showing a second security for renovation of a healthcare facility in the city A.
Fig. 17 is a diagram showing a repair project of a bridge.
Fig. 18 is a diagram showing a second security for a repair operation of a toll bridge and redevelopment of towns on both banks.
Fig. 19 is a diagram showing the project flow and cash flow in issuance of one type of second security used to acquire funds for the repair project of toll bridge and redevelopment of towns on both banks.
Fig. 20 is a diagram showing the project flow and cash flow in issuance of second securities that are further classified by purpose for the repair of the toll bridge.
Fig. 21 is a diagram showing the project flow and cash flow in issuance of three types of second securities used to acquire funds for the repair of the toll bridge X and redevelopment of towns on both banks.
Fig. 22 is a block diagram showing the structure of a securities issuing system.
Fig. 23 is a block diagram showing a securities issuing computer.
Fig. 24 is a diagram showing an investor database.
Fig. 25 is a flowchart showing an issuing process of first and second securities.
Fig. 26 is a flowchart showing purchase order handling of first and second securities.
Fig. 27 is a flowchart showing sell order handling of first and second securities.
Fig. 28 is a flowchart showing a payment process of interest and dividend.
Fig. 29 is a flowchart showing a conversion process for converting a first security into a second security.
Fig. 30 is a diagram showing an example in which first and second securities are issued through a TV shopping program.
Fig. 31 is a diagram showing reconstruction securities and tourism securities.
Fig. 32 is a diagram showing city rebuilding securities.
Fig. 33 is a diagram showing regional development securities for southern Europe and North Africa.
Fig. 34 is a diagram showing energy-related securities.
Fig. 35 is a diagram showing securities for construction of pipeline.
Fig. 36 is a diagram showing desert greening securities.
Fig. 37 is a diagram showing infrastructure management securities.
Fig. 38 is a diagram showing Olympic Games securities.

### MODES FOR CARRYING OUT THE INVENTION

Embodiments of the present invention will be described below in detail with reference to the accompanying drawings. The present invention is not limited to the embodiment described below, and various modifications may be possible without departing from the scope of the invention.

<1. First and Second Securities>
<2. Use Examples of First and Second Securities -High-Speed Railroad Construction->
<2-1. High-Speed Railroad>
<2-2. Use of First Certificates in California High-Speed Railroad Project>
<2-3. Example of Issuance of First Securities Classified by Purpose>
<2-4. Example of Issuance of First Securities Further Classified by Purpose>
<2-5. Example of Second Securities for Raising Funds for Stadium Renovation>
<2-6. Advantages of First Securities>
<2-7. Example of Use of Second Securities for California High-Speed Railroad>
<3. Example of Use of Second Securities -Bridge Repair->
<3-1. Decrepit Bridge>
<3-2. Use of Second Securities for Repair Project of Toll Bridge X and Redevelopment Project of Towns on Both Banks>
<3-3. Example of Issuance of Second Securities Classified by Purpose>
<3-4. Advantages of Second Securities>
<4. Securities Issuing System>
<4-1. System Configuration>
<4-2. Securities Issuing Computer>
<4-3. Securities Issuing Process>
<4-4. Security Purchase Order Handling>
<4-5. Security Sell Order Handling>
<4-6. Payment process of Interest/Dividend>
<4-7. Conversion process>
<4-8. Assessment unit>
<4-9. TV Shopping>
<5. Other Use Examples of First and Second Securities>
<5-1. Reconstruction securities and Tourism Securities>
<5-2. City Rebuilding Securities>
<5-3. Regional Development Securities>
<5-4. Energy-Related Securities>
<5-5. Desert Greening securities>
<5-6. Infrastructure Management Securities>
<5-7. Olympic Games Securities>
<5-8. Possible Application of First and Second Securities>

### <1. First and Second Securities>

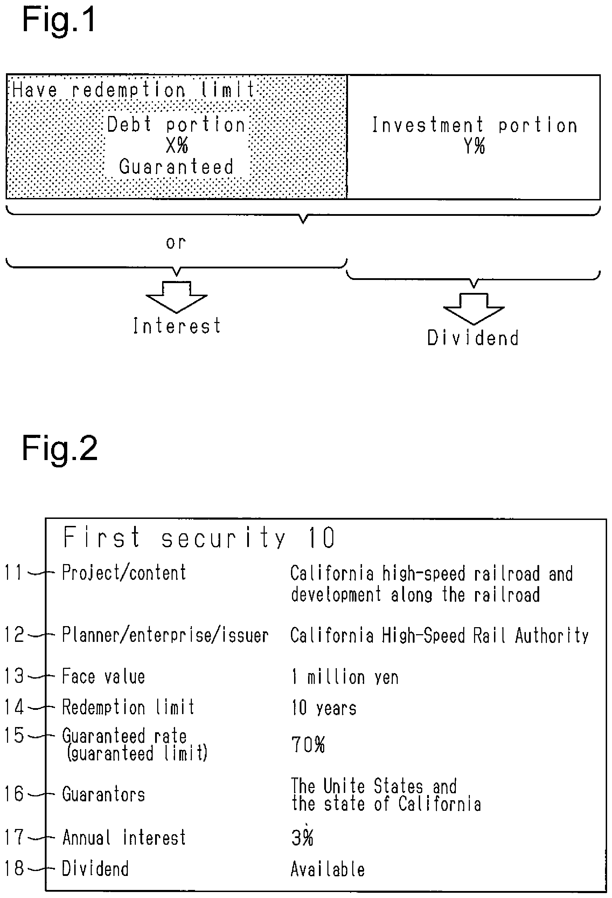

As shown in Figs. 1 and 2, a first security 10 includes the title and contents 11 of the project that uses the funds to be acquired, the planner/enterprise/issuer 12 who plans the project and issues the first security 10, the face value 13 that is paid to the issuer of the first security 10 in exchange for possession of the first security 10, and the redemption limit 14 of the issued first security 10. The first security 10 further includes the guaranteed rate (guaranteed limit) 15, which specifies the amount returned to the security holder by at least one third party that is involved in the issuance of first security 10 if the issuing entity defaults and/or becomes unable to pay interest. The guaranteed rate 15 is expressed as a proportion relative to the face value 13. The first security 10 also includes a guarantor 16 who guarantees the guaranteed amount. Further, the first security 10 includes the interest rate (annual interest) 17, which specifies the interest paid periodically to the security holder and is expressed as a proportion relative to the face value 13 or to the guaranteed portion that is guaranteed with the guaranteed rate, and the dividend 18, that is to be paid to the security holder on the non-guaranteed portion, other than the guaranteed portion guaranteed with the guaranteed rate 15. The first security 10 differs from bonds such as corporate bonds and national bonds in that the first security 10 is partially guaranteed and that the acquired funds are used for the specified purpose. On the other hand, the first security 10 is similar to bonds in that the first security 10 has a redemption limit and pays the interest.

For example, with the first security 10, X% of the face value 13 (0%<X<100% or 0%≤X≤100%) represents the debt portion that is owed by the enterprise and also the guaranteed portion that is guaranteed by a third party guarantor, such as a national or local government. Y% of the face value 13 (face value - debt portion (guaranteed portion)) represents the investment portion for the investor and also the non-guaranteed portion ("risk portion" for investors) that will not be returned if the issuing entity defaults and/or becomes unable to pay interest. The interest rate is expressed as a proportion relative to the face value 13 or to the guaranteed portion. The guarantor 16 may be a private company or a public-private consolidation, as well as a national or local government.

As long as the project operates smoothly, the first security 10 pays the interest to the investor, who is the buyer of the first security 10, every year according to the interest rate (annual interest) 17 until the redemption limit is reached. In addition, the first security 10 pays the dividend as a share of profit. When the redemption limit is reached, the amount corresponding to the face value (1 million yen) is returned. If the project fails and causes the enterprise 12 or the like to default and/or become unable to pay interest before the redemption limit is reached, the guarantor 16 will return the guaranteed limit of X% (0.7 million yen). As will be described in greater detail below, the first security 10 is partially guaranteed, facilitating the acquisition of funds from investors. Thus, the first security 10 is suitable for acquisition of funds for new public works. Further, the first security 10 also includes the non-guaranteed portion, which encourages the security holder to actively participate in the project in hopes of success of the project and higher dividends. The interest rate may be fixed or variable. Furthermore, in addition to the face value 13, the fixed or variable interest, which is paid periodically, may be guaranteed with a similar rate. For example, 70% of the interest (3% of the face value) of the year in which payment of interest is failed may be guaranteed. The first securities 10 may be issued irrespective of the number, sizes, or types of the projects to be funded, provided that the guarantor 16 can guarantee.

Fig. 2 shows an example of a first security 10 for a high-speed railroad project. In the example of Fig. 2, the contents are California high-speed railroad and development along the railroad, the planner/enterprise/issuer 12 is the California High-Speed Rail Authority, the face value 13 is 1 million yen, the redemption limit 14 is ten years, the guaranteed rate (guaranteed limit) 15 that is guaranteed by the guarantors 16, which are the Unite States and the state of California, is 70%, and the interest rate (annual interest) 17 is 3%.

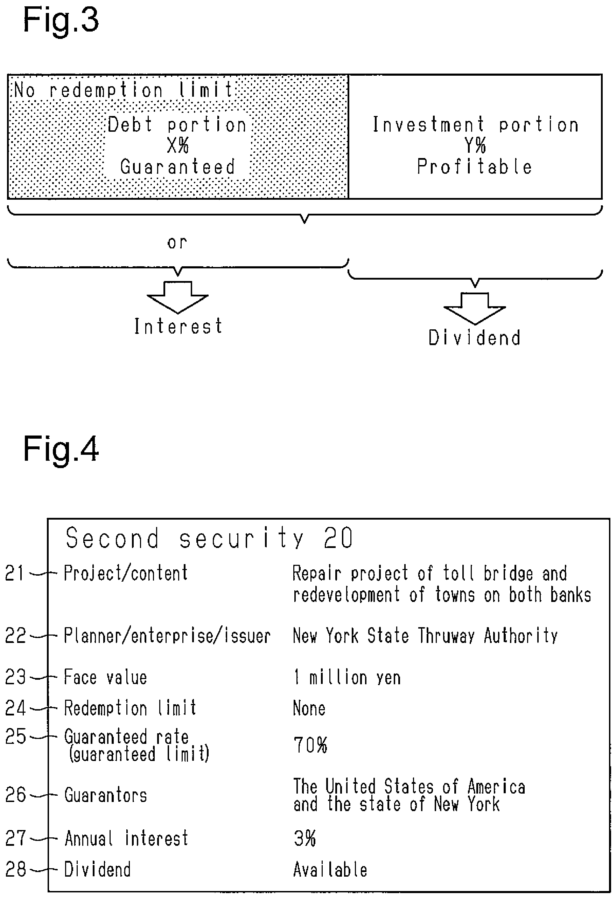

As shown in Figs. 3 and 4, a second security 20 of the present invention includes the title and contents 21 of the project that uses the funds to be acquired, the planner/enterprise/issuer 22 who plans the project and issues the second security 20, and the face value 23 that is paid to the issuer of the second security 20 in exchange for possession of the second security 20. The second security 20 further includes the guaranteed rate (guaranteed limit) 25, which specifies the amount returned to the security holder by at least one third party that is involved in the issuance of second security 20 if the issuing entity defaults and/or becomes unable to pay interest. The guaranteed rate 25 is expressed as a proportion relative to the face value 23. The second security 20 also includes a guarantor 26 who guarantees the guaranteed amount. Further, the second security 20 includes the interest rate (annual interest) 27, which specifies the interest paid periodically to the security holder and is expressed as a proportion relative to the face value 23 or to the guaranteed portion that is guaranteed with the guaranteed rate, and the dividend 28 that is to be paid on the non-guaranteed portion ("risk portion" for the investor) other than the guaranteed portion guaranteed with the guaranteed rate 25. The second security 20 is similar to stock certificates in that the second security 20 does not have a redemption limit 24 and pays the dividend 28. However, unlike stockholders, the holder of the second security 20 is not granted a position to directly participate in the project. The guarantor 26 may be a private company or a public-private consolidation, as well as a national or local government.

As long as the project operates smoothly, the second security pays the interest to the investor, who is the buyer of the first security 10, every year according to the interest rate (annual interest) 27. After the project begins to generate profit, the dividend 28 will be paid according to the profit in the settlement term. If the project fails and causes the enterprise 22 to default and/or become unable to pay interest, the guarantor 26 will return X% (0.7 million yen). For example, as will be described in greater detail below, the second security 20, which does not have a redemption limit or grant the investor a position equivalent to that of stockholders, is suitable for acquisition of funds for a repair project of an existing facility. Further, the second security 20 includes the non-guaranteed portion, on which the dividend is paid. This encourages the security holder to actively participate in the project in hopes of success of the project and higher dividends. The interest rate may be fixed or variable. Furthermore, in addition to the face value 23, the fixed or variable interest, which is paid periodically, may be guaranteed with a similar guaranteed rate. For example, 70% of the interest (3% of the face value) of the year in which payment of interest is failed may be guaranteed. The second securities 20 may be issued irrespective of the number, sizes, or types of the projects to be funded, provided that the guarantor 26 can guarantee.

Fig. 4 shows an example of a second security 20 for a repair project of a toll bridge. In the example of Fig. 4, the contents are a toll bridge connecting Rockland County to Westchester County and redevelopment of neighboring regions, the planner/enterprise/issuer 22 is the New York State Thruway Authority, the face value 23 is 1 million yen, the redemption limit 24 is not set, the guaranteed rate (guaranteed limit) 25 that is guaranteed by the guarantors 26, which are the state of New York and the United States, is 70%, and the interest rate (annual interest) 17 is 3%. After the project begins to generate profit, the dividend 28 will be paid.

The first and second securities 10, 20, shown in Figs. 1 to 4, are new type of securities that include features of bonds and stock certificates. The first and second securities 10, 20 are similar to bonds in that they pay interest and similar to stock certificates in that they pay dividends. The first security 10 is similar to bonds in that it has a redemption limit, and the second security 20 is similar to stock certificates in that it does not have a redemption limit. Although the second security 20 is similar to stock certificates in that it does not have a redemption limit, the second security 20 differs from stock certificates in that it does not grant the security holder a position equivalent to those of stockholders.

With the first and second securities 10, 20, even if payment of the interest defined by a wording becomes impossible, the guaranteed amount corresponding to the given rate is returned to the investors, or the buyers. This makes investors feel more secure and thus facilitates the acquisition of project funds by the enterprise. Moreover, since the first and second securities 10, 20 are guaranteed, their market prices in securities markets where the first and second securities 10, 20 are sold and purchased are less likely to decrease significantly. If the prices of the first and second securities 10, 20 increase in securities markets, the investors can earn profit on sale. On the other hand, the national or local governments that plan the public works are not obliged to guarantee the full face value when the project fails, allowing for easier acquisition of funds through the first and second securities 10, 20. In particular, the first and second securities 10, 20, with which the full face value is not guaranteed, help a national or local government in a tight financial condition to acquire funds through the first and second securities 10, 20. As will be described in greater detail below, the first security 10, which facilitates acquisition of funds from investors, is suitable for raising funds for new public works. The second security 20 is suitable for raising funds for repair in an existing project since the second security 20 does not have a redemption limit, pays only the interest rate (annual interest) 27 and the dividend 28 to the investor, does not require repayment of the amount corresponding to the face value 23, and does not grant the holder of the second security 20 a position equivalent to that of a stockholder. Both securities include the non-guaranteed portion and pay the dividends 18, 28. This motivates the holders of securities to help achieve success of the project, increasing the chance of success.

<2. Use Examples of First and Second Securities -High-Speed Railroad Construction->

### <2-1. High-Speed Railroad>

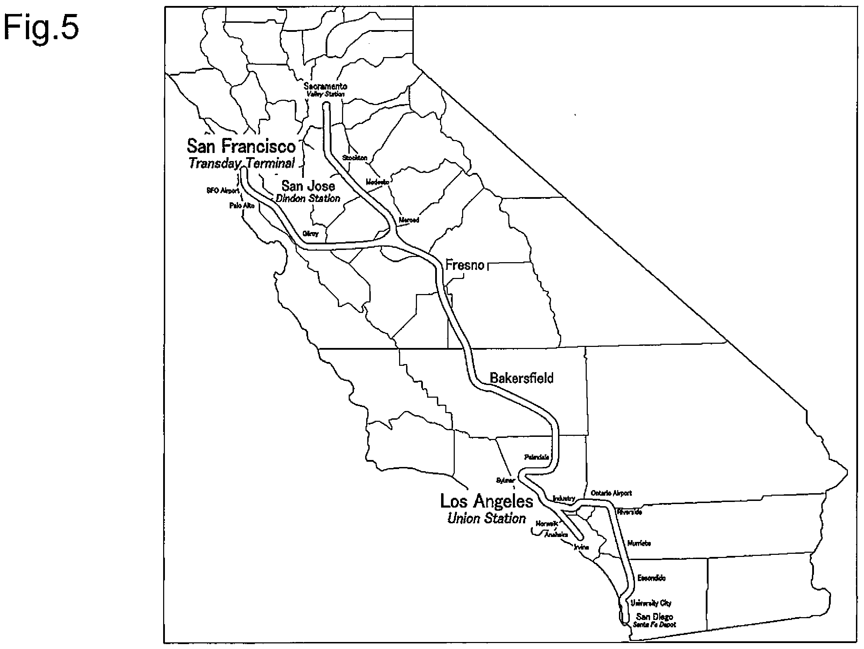

For example, there is a project to construct the California high-speed railroad in the state of California in the United States. As shown in Fig. 5, the project is planned to connect San Francisco and Los Angeles in two and half hours with high-speed trains of a maximum speed of 350 km (220 miles) per hour and construct a railroad that spans over 1,100 km (700 miles) and connects major cities such as Sacramento, San Jose, Fresno, and San Diego.

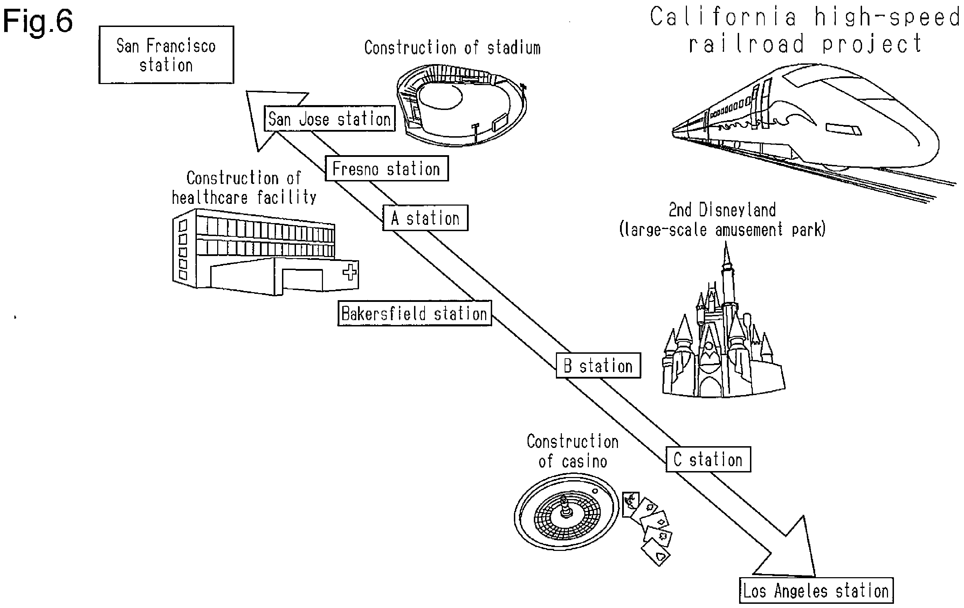

For example, the California high-speed railroad project includes construction of a railroad that connects San Francisco and Los Angeles. The route shown in Fig. 5 runs inland through a vast agricultural region instead of the coast of California. The number of users is estimated to be 91 to 95 million. To further increase the users, development along the railroad is required. As shown in Fig. 6, new cities A, B and C may be constructed between San Francisco and Los Angeles, and high-speed railroad stations and facilities that serve as landmarks may be constructed in those cities.

For example, a large healthcare facility that offers cutting-edge medical treatment is constructed in the new city A, an enormous amusement park comparable to Disneyland is constructed in the new city B, and a casino is constructed in the new city C. This makes the new cities A, B, and C between San Francisco and Los Angeles attractive cities. The California high-speed railroad obtains the passengers who travel to the new cities A, B and C in addition to the passengers who travel between San Francisco and Los Angeles and the passengers who travel to existing cities (e.g., San Jose, Fresno, and Bakersfield). This further increases the users. Moreover, establishing the new cities A, B, and C will increase the population in the regions along the California high-speed railroad, thereby increasing the real-estate values and the tax revenues of the local governments of the cities along the railroad and the state of California. In addition, the new cities can be established within a short time, allowing for a rapid increase in population.

### <2-2. Use of First Certificates in California High-Speed Railroad Project>

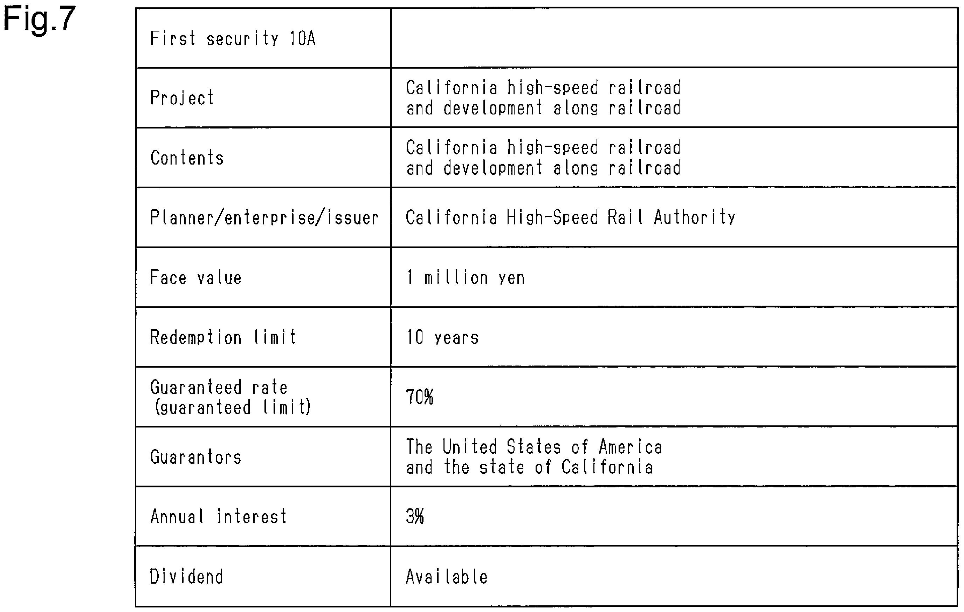

First securities 10 of the present invention are suitable for use in newly constructing the California high-speed railroad as described above. A first security 10A shown in Fig. 7 has the project title of "High-speed railroad construction and development along railroad" and is designed to acquire funds for a high-speed railroad between San Francisco and Los Angeles and development along the railroad. The first securities 10A are used to acquire the funds for construction of the California high-speed railroad and also the funds for projects including construction of the new cities A to C shown in Fig. 6 and construction of station buildings, educational facilities, welfare facilities, and healthcare facilities in the new cities A to C. In addition, the first securities 10A are used to acquire the funds for projects including construction of a large cutting-edge healthcare facility in the new city A, an enormous amusement park comparable to Disneyland in the new city B, and a casino in the new city C.

In other words, the first securities 10A shown in Fig. 7 are used to acquire the entire funds for the California high-speed railroad and development along the railroad. The first security 10A includes a face value of 1 million yen, an annual interest rate of 3%, and a guaranteed rate of 70%. The guarantors of the first security 10A are the United States and the state of California. This gives investors more confidence in purchasing the first securities 10 and therefore allows the enterprise, the California High-Speed Rail Authority (CHSRA), to smoothly acquire funds. The holder of the security will receive dividends as a share of profit.

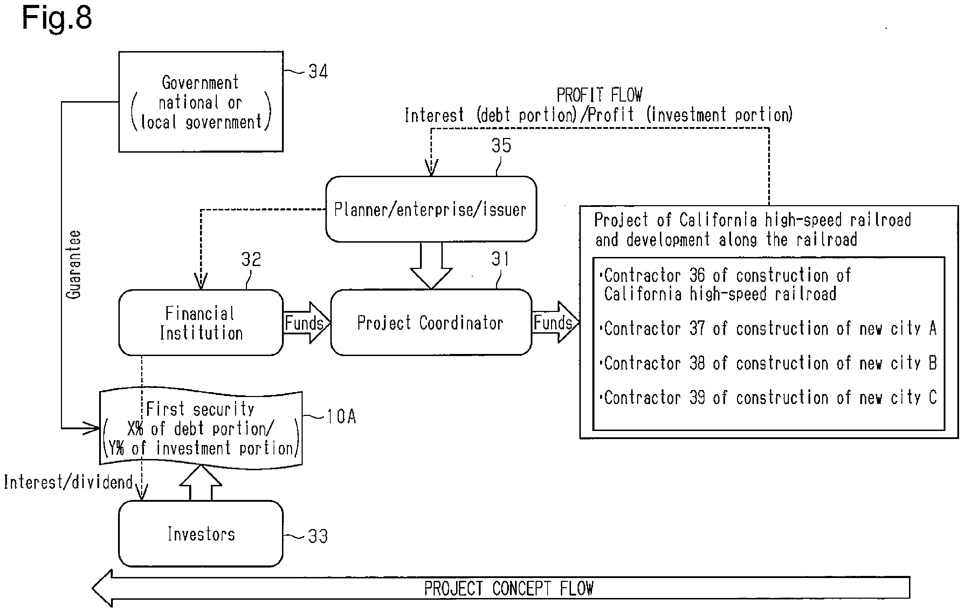

Referring to Fig. 8, the project flow and cash flow in issuance of one type of first securities 10A that may be used to acquire funds for the California high-speed railroad and development, along the railroad as shown in Fig. 7, will now be described. When the project of California high-speed railroad and development along the railroad is conceived, an enterprise 35 may commission a project coordinator 31 to devise the construction of California high-speed railroad and new cities A, B and C in details. Construction contractors 36 to 39 may be selected, and the lowest budget needed to maximize the effectiveness of the project is developed (calculated backward from the project). That is, the project coordinator 31 is in charge of the individual projects of the California high-speed railroad and construction of the new cities A to C. The project coordinator 31 and a financial institution/securities firm 32 determine the total amount of funds to be acquired through the first securities 10A, the total number of first securities 10A to be issued, and the face value. In other words, instead of determining the contents of the projects based on the funds that can be acquired, the necessary total amount is determined based on the contents of the projects and then acquired through the first securities 10A. Further, the project coordinator 31 and the financial institution/securities firm 32 determine the interest rate and dividend. The enterprise 35, project coordinator 31, and financial institution/securities firm 32 may determine the guarantors 34, such as national or local governments, and the guaranteed rate that is to be guaranteed by the guarantors 34 to design the first securities 10A. The financial institution/securities firm 32 takes on and/or is commissioned to sell the first securities 10A, which may be designed by the financial institution/securities firm 32 alone or together with the project coordinator 31, to investors 33 and acquires funds. In this embodiment, the first securities 10A allow for direct financing in which investors 33 directly finance the enterprise 35 or the like. The financial institution/securities firm 32, enterprise 35, and project coordinator 31 may be a policy based financial institution, such as Development Bank, a specific purpose company/specified purpose company (SPC) for a region, a SPC for a project, a public-private consolidation, or a combination thereof.

Through the project coordinator 31, the acquired funds are distributed to the contractor 36 of construction of the California high-speed railroad, the contractor 37 of construction of the new city A, the contractor 38 of construction of the new city B, and the contractor 39 of construction of the new city C and used for each work. In this example, since the funds are acquired for the comprehensive project of California high-speed railroad and development along the railroad, the acquired funds can be used for any of the individual projects within the comprehensive project. That is, the funds can be used for the projects of new cities A to C, as well as the construction of the California high-speed railroad. The enterprise 35 or the like pays the interest to the investors 33 through the financial institution/securities firm 32. When paying the interest, the enterprise 35 or the like pays the resources to the financial institution/securities firm 32, and the financial institution/securities firm 32 pays the interest to the investors 33. In addition, the dividends will be paid after the project begins to generate profit. Further, the projects described above may be evaluated by a third-party institution at least once every fiscal year.

### <2-3. Example of Issuance of First Securities Classified by Purpose>

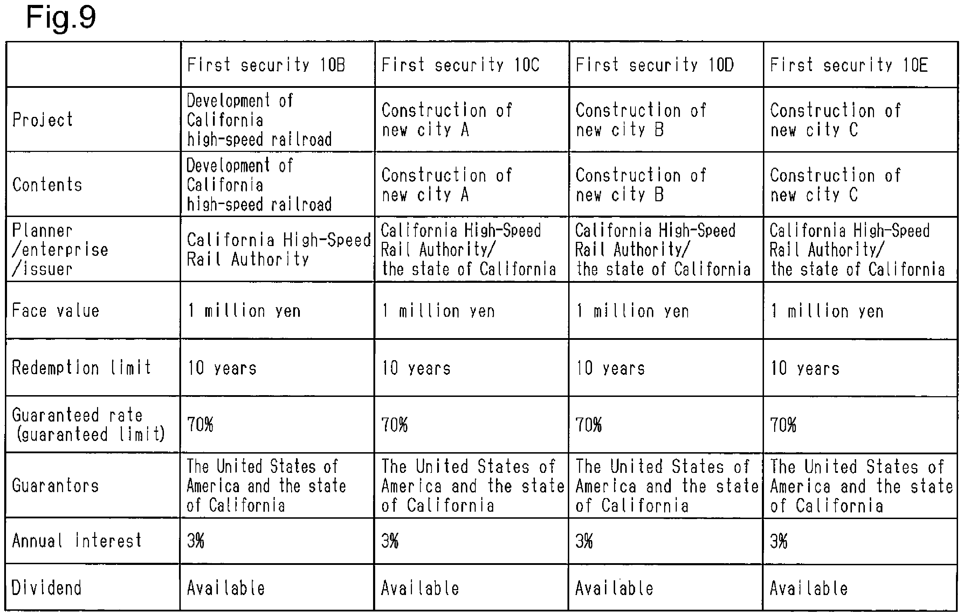

In the example described above, the entire funds for the California high-speed railroad and development along railroad are acquired through one type of first securities 10A. However, the first securities 10 of the present invention may be a plurality of types of first securities 10 that are used to acquire funds for the project of California high-speed railroad and development along the railroad. Specifically, as shown in Fig. 9, first securities 10B may raise funds for the construction of California high-speed railroad, first securities 10C may raise funds for the construction of new city A, first securities 10D may raise funds for the construction of new city B, and first security 10E may raise funds for the construction of new city C.

The first securities 10B for the construction of California high-speed railroad raise funds for the elemental technologies of high-speed railroad, such as development and construction of the train line/track facilities, signal systems, power systems, rolling stock technologies, and train protection system, introduction of ticketing system, and construction of station buildings. As for the construction of new cities A to C, funds are acquired for the construction of facilities that provide city functions, such as station buildings, educational facilities, welfare facilities, and healthcare facilities.

The guarantors for the construction of California high-speed railroad include the United States and the state of California. This gives investors more confidence in purchasing the securities and therefore allows the enterprises, the California High-Speed Rail Authority and the state of California, to smoothly acquire funds. In addition, the guarantors for the construction of new cities A to C also include the United States and the state of California. This gives investors more confidence in purchasing the securities and therefore allows the enterprises, the California High-Speed Rail Authority and the state of California, to smoothly acquire funds. Further, investors can make a selection among multiple types of first securities 10 (10B to 10E) that relate to the California high-speed railroad. Moreover, the holders of the first securities 10B to 10E can receive dividends as a share of profit when the projects of their respective securities generate profit.

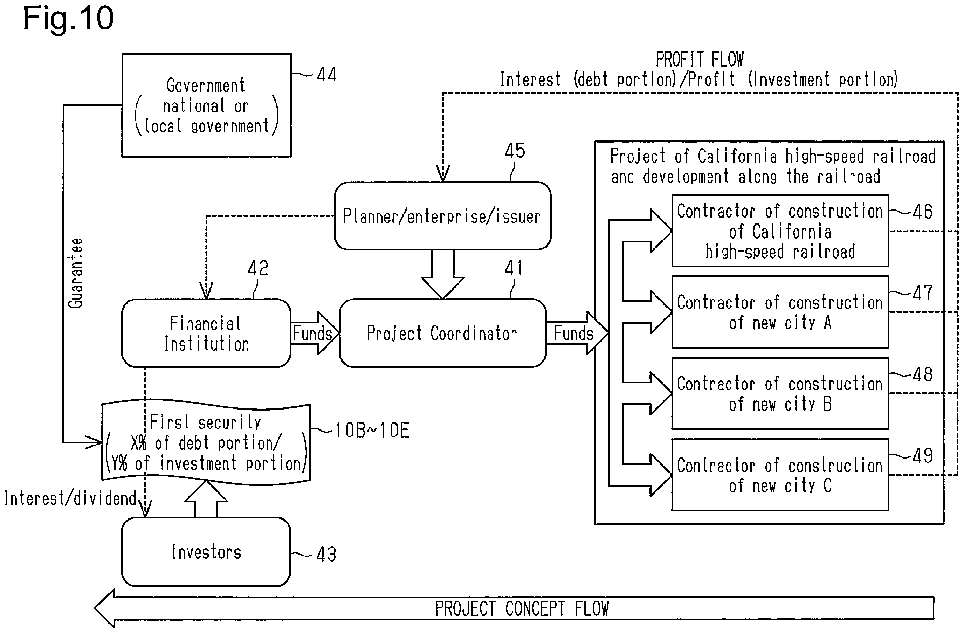

Referring to Fig. 10, the project flow and cash flow in issuance of four types of first securities 10B to 10E used to acquire funds for the construction of the California high-speed railroad and new cities A to C as shown in Fig. 9 will now be described. When the project of construction of California high-speed railroad and new cities A to C is conceived, an enterprise 45 may commission a project coordinator 41 to devise the construction of California high-speed railroad and new cities A, B and C in details. Construction contractors 46 to 49 may be selected, and the lowest budget needed to maximize the effectiveness of the project is developed (calculated backward from the project). That is, the project coordinator 41 is in charge of the individual projects of the construction of California high-speed railroad and the new cities A to C. The project coordinator 41 and a financial institution/securities firm 42 determine the total amount of funds to be acquired through the first securities 10B to 10E, the total number of each set of first securities 10B to 10E to be issued, and their face values. In other words, instead of determining the contents of the projects based on the funds that can be acquired, the necessary total amounts are determined based on the contents of the projects and then acquired through the first securities 10B to 10E. Further, the project coordinator 41 and the financial institution/securities firm 42 determine the interest rates and dividends. The enterprise 45, project coordinator 41, and financial institution/securities firm 42 may determine the guarantors 44, such as national or local governments, and the guaranteed rates that are to be guaranteed by the guarantors 44 to design the first securities 10B to 10E. The financial institution/securities firm 42 takes on and/or is commissioned to sell the first securities 10B to 10E, which may be designed by the financial institution/securities firm 42 alone or together with the project coordinator 41, to investors 43 and acquires funds. The financial institution/securities firm 42 and enterprise 45 may be a policy based financial institution, such as Development Bank, SPC for a region, SPC for a project, public-private consolidation, or a combination thereof.

Through the project coordinator 41, the funds acquired through the first securities 10B to 10E for each project are distributed to the contractor 46 of construction of California high-speed railroad, the contractor 47 of construction of the new city A, the contractor 48 of construction of the new city B, and the contractor 49 of construction of the new city C and used for each work. In this example, the funds acquired for the construction of California high-speed railroad through the first securities 10B are not used for other projects (projects of new cities A to C). The enterprise 45 or the like pays the interest and dividends to the investors 43 through the financial institution/securities firm 42. When paying the interest and dividends, the enterprise 45 or the like pays resources to the financial institution/securities firm 42, and the financial institution/securities firm 42 pays the interest and dividends to the investors 43. Further, the projects described above may be evaluated by a third-party institution at least once every fiscal year.

### <2-4. Example of Issuance of First Securities Further Classified by Purpose>

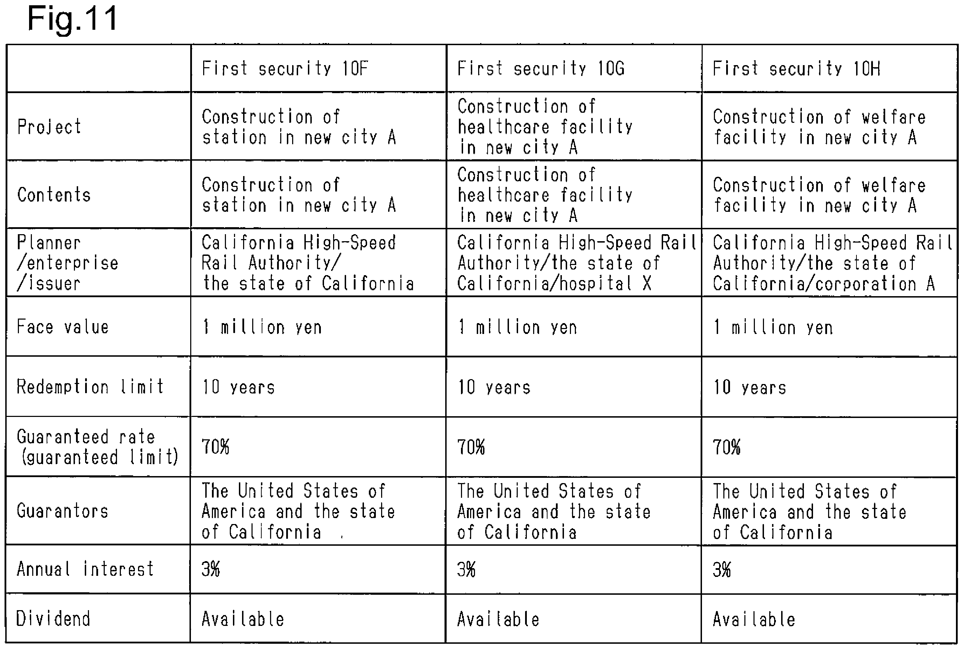

The first securities 10 that are further classified by purpose may be issued for the construction of California high-speed railroad. Fig. 11 illustrates the securities for the new city A. As shown in in Fig. 11, first securities 10F raise funds for the construction of a station in new city A, first securities 10G raise funds for the construction of a healthcare facility in the new city A, and first securities 10H raise funds for the construction of a welfare facility in the new city A. The healthcare facility in the new city A preferably offers cutting-edge medical treatment. The guarantors of the projects relating to the new city A include the state of California and the United States. This gives investors more confidence in purchasing the securities and therefore allows the enterprises, the California High-Speed Rail Authority, the state of California, and a hospital X to smoothly acquire funds. In addition, the investors can clearly know which project they are to invest in when selecting from the various types of first securities 10 (10F to 10H), which are further classified by purpose for the new city A relating to the California high-speed railroad.

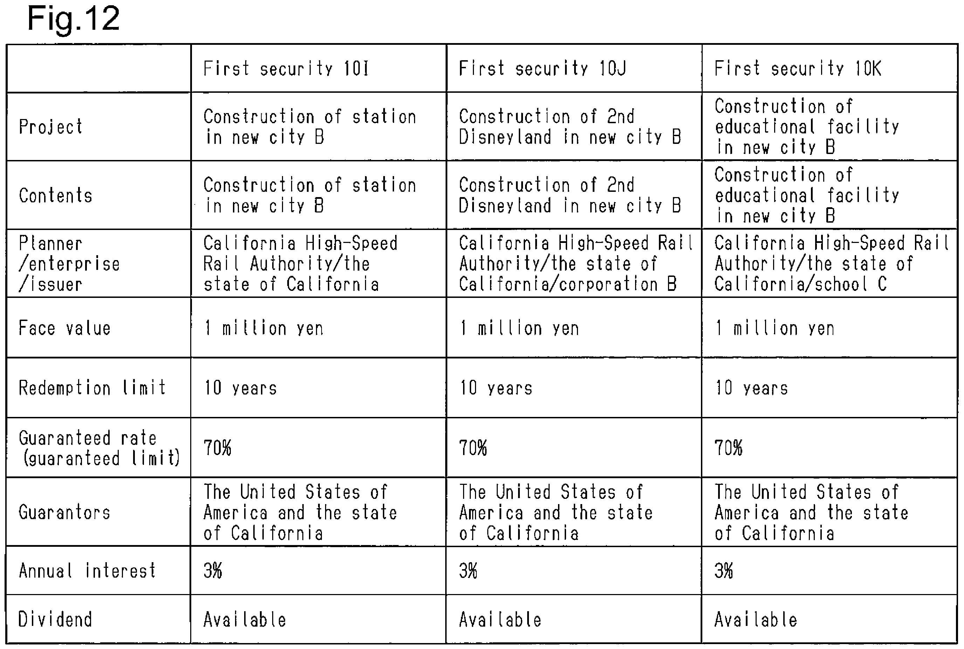

Fig. 12 shows the securities for the new city B. As shown in Fig. 12, first securities 10I raise funds for the construction of a station in the new city B, first securities 10J raise funds for the construction of an enormous amusement park, which will be comparable to Disneyland and serve as a landmark of the new city B, and first securities 10K raise funds for the construction of an educational facility, such as a grade school, intermediate school, senior high school, college, and research facility in the new city B. For example, the educational facility may be a school that specializes in a specific field. As a city function of the new city B, a western style residential college may be built in which students reside together with the college staff, such as professors and researchers. This may enhance the relationships among the students and between the students and the college staff and improve the researches in the college and education of the students. Further, the new city B may encourage people who are involved in the college to start business, such as a startup company, in the city B. The first securities 10K or other first securities 10 or second securities 20 may be used to acquire funds for a research in the college. This may nurture startup companies. The guarantors of the projects relating to the new city B include the United States and the state of California. This gives investors more confidence in purchasing the securities and therefore allows the enterprises, the California High-Speed Rail Authority and the state of California, to smoothly acquire funds. In addition, the investors can clearly know which project they are to invest in when selecting from the various types of first securities 10 (10I to 10K), which are further classified by purpose for the new city B relating to the California high-speed railroad.

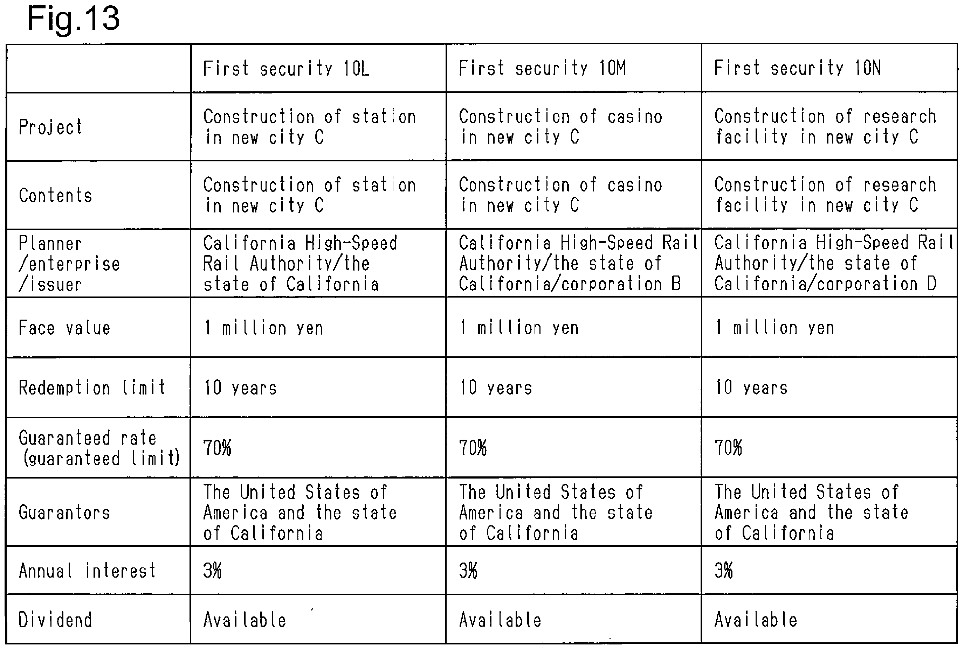

Fig. 13 shows the securities for the new city C. As shown in Fig. 13, first securities 10L raise funds for the construction of a station in the new city C, first securities 10M raise funds for the construction of a casino, which will serve as a landmark of the new city C, and first securities 10N raise funds for the construction of a research facility in the new city C. In addition to raise funds for structural functions such as the research facility, the first securities 10N may raise funds for non-structural functions such as a new research. In this case, another type of first or second securities, different from the first securities 10N, may be issued to raise funds for the new research. For example, the first and second securities 10 and 20 may be used to raise funds for a research of induced pluripotent stem (IPS) cells, genetic information, new pharmaceuticals, quantum information processing, or robotics. The guarantors of the projects relating to the new city C include the United States and the state of California. This gives investors more confidence in purchasing the securities and therefore allows the enterprises, the California High-Speed Rail Authority and the state of California, to smoothly acquire funds. In addition, the investors can clearly know which project they are to invest in when selecting from the various types of first securities 10 (10L to 10N), which are further classified by purpose for the new city C relating to the California high-speed railroad.

### <2-5. Example of Second Securities for Raising Funds for Stadium Renovation>

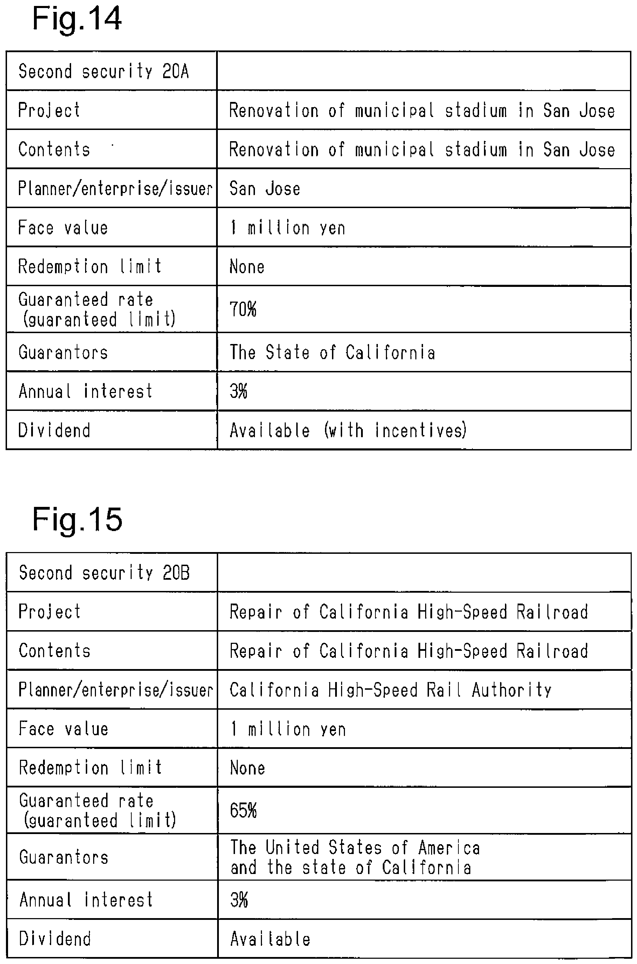

The construction of California high-speed railroad may involve renovation of facilities in an existing city such as San Jose. The second securities 20 may be preferably used for such a purpose. For example, San Jose, which is a stop of the California high-speed railroad, has a municipal baseball stadium, and second securities 20A may be used to acquire funds for renovation of the baseball stadium. As shown in Fig. 14, the second securities 20A are used for renovation of the municipal baseball stadium, do not have a redemption limit, and pay dividends. The second securities 20A allow San Jose to promptly acquire funds and start the renovation of the stadium. The second securities 20A are similar to stocks but do not grant the holders of the second securities 20A positions equivalent to those of stockholders. Thus, even if a large number of second securities 20A are owned by one person, the owner of the stadium would not change. As incentives, the names of buyers of the second securities 20A may be indicated on seats in the stadium, reserved seats may be provided, or discount coupons for games may be given, for example, to attract investors who like baseball to the second securities 20A. The contents of incentives may be changed at predetermined timing. As is the case with the first securities 10, the guarantor includes the state of California. This gives investors more confidence in purchasing the second securities. In addition, even if the project fails, the state of California is not obliged to return the full amount and thus bears less financial burden.

### <2-6. Advantages of First Securities>

The first securities 10 facilitate acquisition of a great amount of private funds for the project of California high-speed railroad and development along the railroad. In addition to the California high-speed railroad, the development along the railroad constructs attractive cities A to C with individualities. Patients may use the California high-speed railroad to go to the city A where they can receive cutting-edge medical treatment. The establishment of the enormous amusement park comparable to Disneyland makes the city B an attractive city that brings tourists from the neighboring cities through the California high-speed railroad into the enormous amusement park in the city B. The city C, which has a casino, can bring people through the California high-speed railroad into the casino. The California high-speed railroad therefore gains the passengers traveling to the cities A to C in addition to the passengers traveling between the San Francisco station and the Los Angeles station and between the exiting cities. Further, the real-estate values in the regions along the California high-speed railroad, including cities A to C, may increase, allowing the enterprise, project coordinator, and the like to obtain development profit by selling the land in lot. Such profit may be used for repayment of the principals of the first securities 10. Moreover, since the first and second securities 10, 20 include the non-guaranteed portions and dividends, the holders of securities may actively participate in the respective projects, thereby facilitating success of the projects. For example, the holders of securities may actively use the high-speed railroad and visit the facilities like the amusement park and casino. Moreover, the holders of the first securities 10 can receive dividends as a share of profit when the projects of their respective securities generate profit.

Some public works are unprofitable. By broadening the scope of a project funded through first securities 10, as is the case with the project of the California high-speed railroad and development along the railroad shown in Fig. 7, an unprofitable project can be included into a profitable project. Such a project, as a whole, improves administrative services.

Since the first and second securities 10, 20 are guaranteed, their market prices in the securities market where the first and second securities 10, 20 are sold and purchased are unlikely to decrease significantly. In addition, factors such as increased real-estate values may increase the prices of the first and second securities 10, 20 in the securities market. Increases in the prices of the first and second securities 10, 20 allow the investors to earn profit on sale. Although the interest rate tends to decrease as the price of the bond increases, the investors can earn profit by selling the first and second securities 10, 20 in the market.

In order to give preferential treatment to long-term security holders, the interest rate of the first securities 10 may be changed after the predetermined time has elapsed since the issuance. For example, the interest rate may be changed from 3% to 3.5% after the predetermined time has elapsed. Further, the interest rate may be increased in steps or pegged to the market rate.

### <2-7. Example of Use of Second Securities for California High-Speed Railroad>

As described above, the California high-speed railroad may require renovation of the train line/track facilities or repair of trains or station buildings after one or more decades. The second securities 20, shown in Figs. 3 and 4, are suitable for such purposes. The second securities 20 do not have a redemption limit. Thus, the investors can continue to receive the interest and dividends until they sell the second securities 20 to a third party. The example shown in Fig. 15, which is for the project to renovate the California high-speed railroad, pays dividends and carries an interest rate of 3%. With such second securities 20B, even if payment of the interest defined by a wording becomes impossible, the guaranteed amount corresponding to the given rate is returned to the investors, or the buyers. This makes investors feel more secure. In addition, the interest may be partially guaranteed so that, when payment of the interest becomes impossible, a portion of the interest corresponding to the rate similar to the rate for the face value may be guaranteed. This facilitates acquisition of project funds by the enterprises, the California High-Speed Rail Authority. On the other hand, the United States and the state of California that plan the public works are not obliged to guarantee the full face value when the project fails, allowing for easier acquisition of funds using the second securities 20B. Furthermore, unlike stocks, even if a large number of the second securities 20B are owned by one person, the owner would not change. This limits confusion in the project.

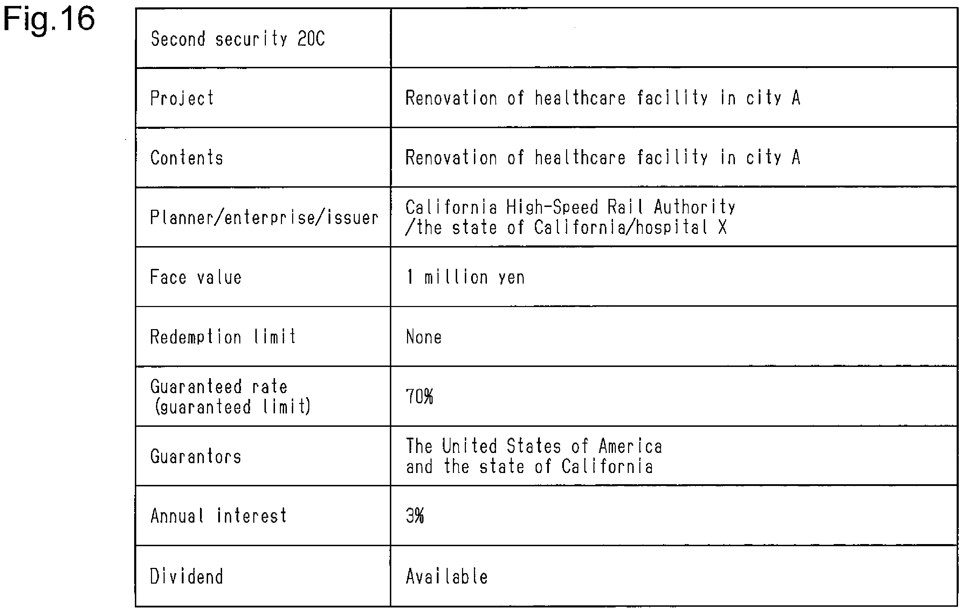

The cutting-edge healthcare facility in the city A may require replacement of medical devices or renovation of the facility after some time. Second securities 20C are suitable for such purposes. The example shown in Fig. 16, which is for the project to renovate the healthcare facility, pays dividends and carries an interest rate of 3%. With such second securities 20C, even if payment of the interest defined by a wording becomes impossible, the guaranteed amount corresponding to the given rate is returned to the investors, or the buyers. This makes investors feel more secure and facilities acquisition of project funds by the enterprise, which is the hospital X or the like. On the other hand, the United States and the state of California that plan the public work are not obliged to guarantee the full face value when the project fails, allowing for easier acquisition of funds using the second securities 20C. Furthermore, unlike stocks, even if a large number of second securities 20C are owned by one person, the owner would not change. This limits confusion in the project.

A first security 10 may be a convertible security so that conversion right exercise data that gives instructions for the first security 10 to be converted into a second security 20 may be received when the redemption limit is reached or during the predetermined period before the redemption limit, and the first security 10 may be converted into a second security 20 upon redemption. When the investor who owns such a first security 10 exercises the conversion right, the first security 10 is extinguished and leaves a second security 20. This allows the investor to secure a stable cash flow as the holder of the first security 10 before exercising the conversion right and then, if the performances of the enterprise or the like improve, become the holder of a second security 20 by exercising the conversion right and receive dividends in addition to the interest to enjoy the befits of the improved performances. The enterprise or the like does not have to pay the amount of face value upon redemption and thus bears less financial burden. Further, a second security 20 may be newly issued before the redemption limit of the first security 10.

The interest rate of the second securities 20 may be a variable interest rate that is pegged to the market interest rate. The second securities 20 pay dividends to the investors as a share of profit of the project.

The guaranteed rate of first securities 10 that are issued when constructing a new infrastructure may differ from the guaranteed rate of second securities 20 that are issued when repairing this infrastructure. For example, with respect to a guaranteed rate of 70% of the first securities 10, the guaranteed rate of the second securities 20 may be increased to 80%, decreased to 60%, or changed to 0%. The guaranteed rate may also be changed when converting a first security 10 into a second security 20.

The high-speed train may be a wheeled train, such as Shinkansen in Japan, TGV in France, and ICE in Germany, or a magnetic levitation train. The stretch of high-speed railroad is not limited to between San Francisco and Los Angeles as described above and may be between Boston or New York and Washington, D.C. and Baltimore or may connect Washington, Dallas, and New York. Further, a high-speed railroad may extend between Tokyo and Nagoya or Osaka or between major airports, such as Haneda Airport and Narita Airport, in Japan. A high-speed railroad may extend over multiple countries in Europe, Asia or South America. When a railroad stretches over multiple countries, first and second securities 10, 20 may be issued separately in each country or issued by a World Bank group, such as the International Bank for Reconstruction and Development. High-speed trains that traverse the Eurasian, African, South American, or Australian continent may be provided. Along the railroad, new cities may be established, and existing cities may be revived. This allows for relocation of cities for economic recovery. For example, a high-speed railroad may connect 17 major cities in the United State, new cities may be established between the major cities, and existing cities may be revived. Further, a high-speed railroad may connect Alaska to Chile or London to the Cape of Good Hope, or may transverse Tokyo, Seoul, Mongolia, the Middle East, and Africa. A long tunnel that extends over multiple countries or crosses a channel may be constructed. Guarantors may be countries along the railroad, World Bank group, European Bank for Reconstruction and Development, Nordic Investment Bank, Inter-American Development Bank, or a public-private consolidation.

<3. Example of Use of Second Securities -Bridge Repair->

### <3-1. Decrepit Bridge>

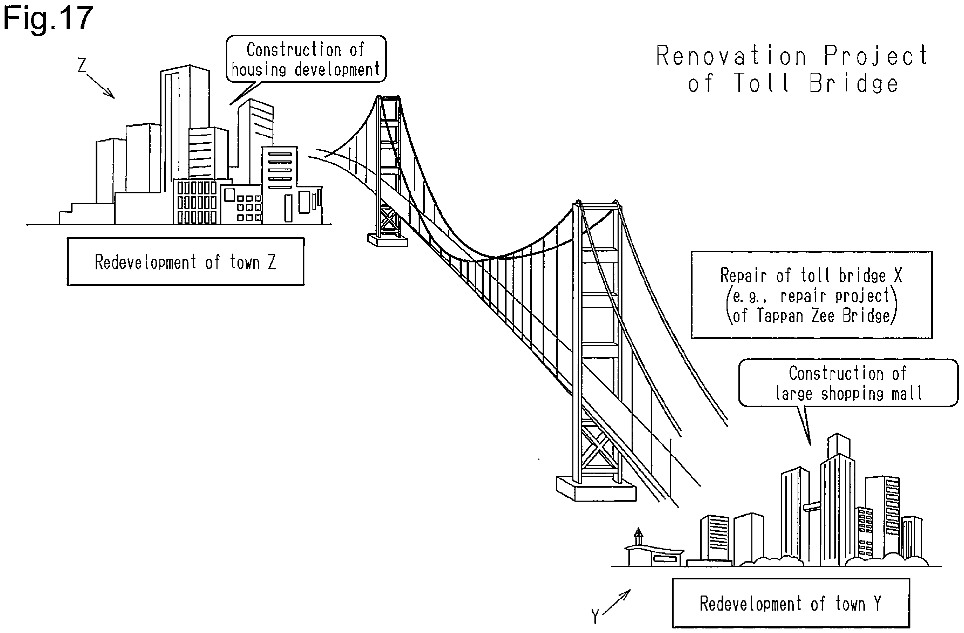

For example, the Tappan Zee Bridge, which crosses the Hudson River to connect Rockland County with Westchester County, was built in 1955. Although the bridge carries an expressway of the state of New York and serves as a crucial transportation system, the bridge is becoming decrepit. The Tappan Zee Bridge is a toll bridge managed by the New York State Thruway Authority. This significantly large bridge has a total length of 4,881 mm and requires a great amount of funds to repair. As shown in Fig. 17, repair of a bridge X may include redevelopment of at least one of the towns Y, Z that are connected by the bridge X. The redeveloped towns can serve as tourism resources and increase the user of the bridge x. For example, a redevelopment project of the town Y may construct a large shopping mall. A redevelopment project of the town Z may construct a new high-rise apartment building, housing development, and educational/welfare facilities, such as schools, to increase the population. Accordingly, more people will travel between the large shopping mall in the town Y and the residential town Z. In the town Z and/or town Y, a western style residential college may be built in which students reside together with the college staff, such as professors and researchers. This may enhance the relationships among the students and between the students and the college staff and improve the researches in the college and education of the students. Further, the town Z may encourage people who are involved in the college to start business, such as a startup company, in the town Z. This may increase the populations in the regions around the bridge X and thus the users of the toll bridge X.

### <3-2. Use of Second Securities for Repair Project of Toll Bridge X and Redevelopment Project of Towns on Both Banks>

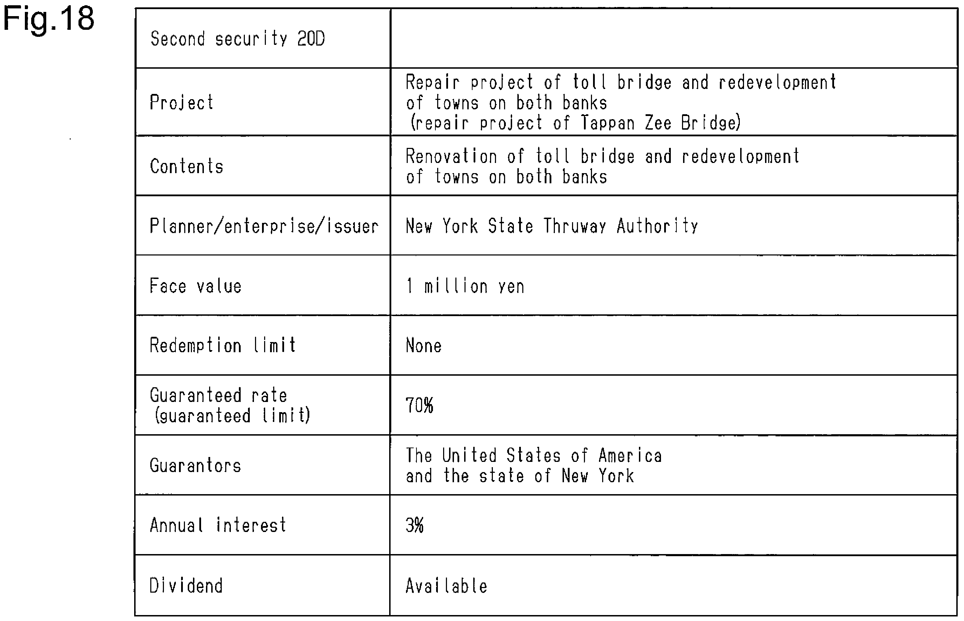

As shown in Fig 18, second securities 20D that raise funds for a repair project of toll bridge X and redevelopment of towns on both banks pay dividends and carry an interest rate of 3% for the repair project of toll bridge X and redevelopment of towns on both banks. With such second securities 20D, even if payment of the interest defined by a wording becomes impossible, the guaranteed amount corresponding to the given rate is returned to the investors, or the buyers. This makes investors feel more secure and facilities acquisition of project funds by the enterprise, which is the New York State Thruway Authority or the like. On the other hand, the United States and the state of New York that plan the public works are not obliged to guarantee the full face value when the project fails, allowing for easier acquisition of funds using the second securities 20D. In addition, unlike stocks, even if a large number of the second securities 20D are owned by one person, the owner would not change. This limits confusion in the project. Further, the second security 20D includes the non-guaranteed portion, on which dividends are paid. This encourages the security holders to actively participate in the project in hopes of success of the project.

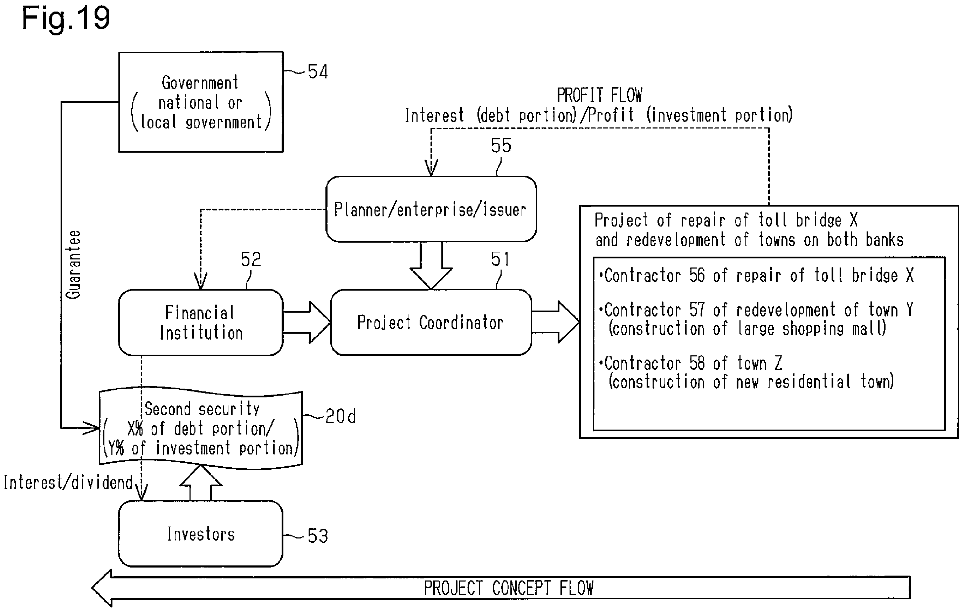

Referring to Fig. 19, the project flow and cash flow in issuance of one type of second security 20D used to acquire funds for the repair project of toll bridge X and redevelopment of towns on both banks as shown in Fig. 18 will now be described. When the repair project of toll bridge X and redevelopment of towns on both banks are conceived, an enterprise 55 may commission a project coordinator 51 to devise the repair of toll bridge X, redevelopment of the town Y (construction of a large shopping mall), and redevelopment of town Z (construction of a new housing development) in details. Construction contractors 56, 57, 58 of respective projects may be selected, and the lowest budget needed to maximize the effectiveness of the projects is developed (calculated backward from the projects). That is, the project coordinator 51 is in charge of the individual projects of toll bridge X repair and redevelopment of towns Y and Z. The project coordinator 51 and a financial institution/securities firm 52 determine the total amount of funds to be acquired through the second securities 20D, the total number of second securities 20D to be issued, and the face value (calculated backward from the projects). In other words, instead of determining the contents of the projects based on the funds that can be acquired, the necessary total amount is determined based on the contents of the projects and then acquired through the second securities 20D. Further, the project coordinator 51 and the financial institution/securities firm 52 determine the interest rate and dividend. The enterprise 55, project coordinator 51, and financial institution/securities firm 52 may determine the guarantors 54, such as national or local governments, and the guaranteed rate that is to be guaranteed by the guarantors 54 to design the second securities 20D. The financial institution/securities firm 52 takes on and/or is commissioned to sell the second securities 20D, which may be designed by the financial institution/securities firm 52 alone or together with the project coordinator 51, to investors 53 and acquires funds. The financial institution/securities firm 52, enterprise 55, and project coordinator 51 may be a policy based financial institution, such as Development Bank, SPC for a region, SPC for a project, public-private consolidation, or a combination thereof.

Through the project coordinator 51, the acquired funds are distributed to the contractor 56 of the repair of toll bridge X, the contractor 57 of the construction of large shopping mall in the town Y, and the contractor 58 of the construction of housing development in the town Z and used for each work. In this example, since the funds are acquired for the comprehensive project of toll bridge X repair and redevelopment of towns on both banks, the acquired funds can be used for any of the individual projects. That is, the funds can be used for the construction of a large shopping mall in the town Y and the construction of a housing development in the town Z, as well as for the repair project of the toll bridge X. The enterprise 55 or the like pays the interest to the investors 53 through the financial institution/securities firm 52. When paying the interest, the enterprise 55 or the like pays the resources to the financial institution/securities firm 52, and the financial institution/securities firm 52 pays the interest to the investors 53. In addition, the dividends will be paid when the project generates profit. Further, the projects described above may be evaluated by a third-party institution at least once every fiscal year.

### <3-3. Example of Issuance of Second Securities Classified by Purpose>

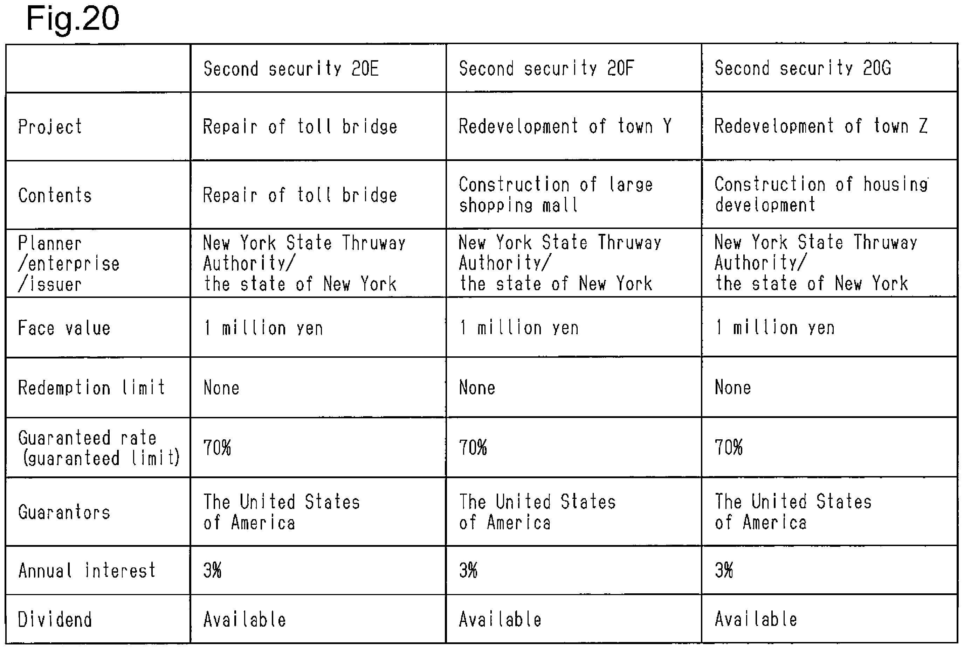

In the example described above, the funds for the repair project of toll bridge X and redevelopment of towns on both banks are acquired through one type of second securities 20D. However, the second securities 20 that are further classified by purpose may be issued. As shown in Fig. 20, second securities 20E may raise funds for the repair of the toll bride X, second securities 20F may raise funds for the construction of a large shopping mall as redevelopment of the town Y, and second securities 20G may raise funds for the construction of a housing development as redevelopment of the town Z. The guarantor of the repair project of the toll bridge X is the United States. This gives investors more confidence in purchasing the securities and therefore allows the enterprises, the state of New York and the New York State Thruway Authority, to smoothly acquire funds. Further, the guarantor of the redevelopment project of towns Y and Z is the United States. This gives investors more confidence in purchasing the securities and allows the enterprises, the state of New York and the New York State Thruway Authority, to smoothly acquire funds. Further, investors can make a selection among multiple types of second securities 20E to 20G that relate to the repair project of the toll bridge X. When constructing a new shopping mall, first securities 10 may be issued to acquire funds for the construction.

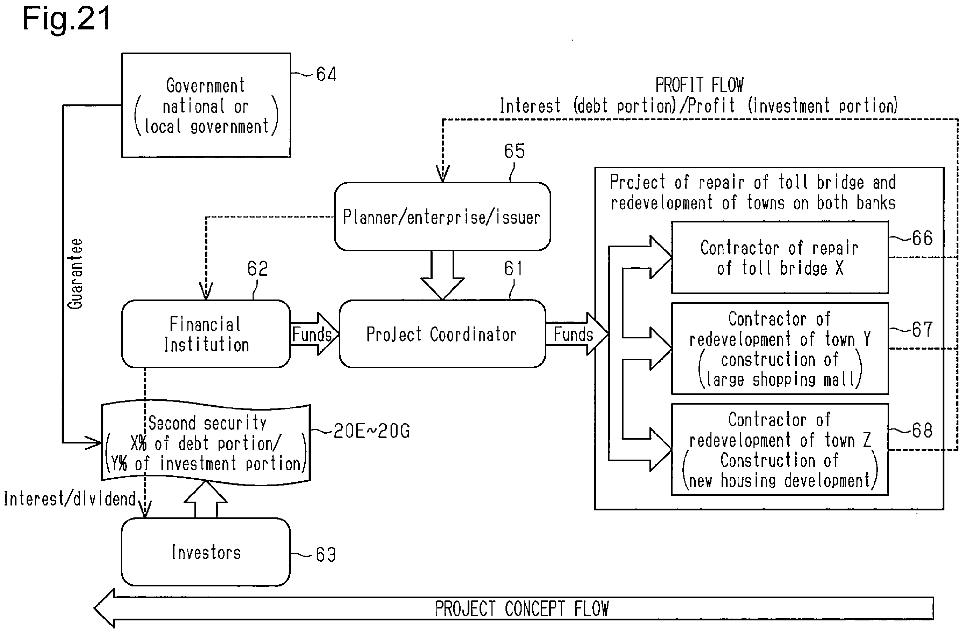

Referring to Fig. 21, the project flow and cash flow in issuance of three types of first securities 10E to 10G used to acquire funds for the repair project of the toll bridge X and redevelopment of towns on both banks as shown in Fig. 20 will now be described. When the repair project of the toll bridge X and redevelopment of towns Y, Z on both banks are conceived, an enterprise 65 may commission a project coordinator 61 to device the repair project of toll bridge, redevelopment of the town Y (construction of a large shopping mall), and redevelopment of the town Z (construction of a new housing development) in details. Construction contractors may be selected, and the lowest budget needed to maximize the effectiveness of the project is developed. That is, the project coordinator 61 is in charge of the individual projects of repair project of the toll bridge X, redevelopment of the town Y (construction of a large shopping mall), and redevelopment of the town Z (construction of a new housing development). The project coordinator 61 and a financial institution/securities firm 62 determine the total amount of funds to be acquired through the second securities 20E to 20G, the total number of each set of second securities 20E to 20G to be issued, and their face values (calculated backward from the projects). In other words, instead of determining the contents of the projects based on the funds that can be acquired, the necessary total amounts are determined based on the contents of the projects and then acquired through the second securities 20E to 20G. Further, the project coordinator 61 and the financial institution/securities firm 62 determine the interest rates and dividends. The enterprise 65, project coordinator 61, and financial institution/securities firm 62 may determine the guarantors 64, such as national or local governments, and the guaranteed rates that are to be guaranteed by the guarantors 64 to design the second securities 20E to 20G. The financial institution/securities firm 62 takes on and/or is commissioned to sell the second securities 20E to 20G, which may be designed by the financial institution/securities firm 62 alone or together with the project coordinator 61, to investors 63 to acquire funds. The financial institution/securities firm 62, enterprise 65, and project coordinator 61 may be a policy based financial institution, such as Development Bank, SPC for a region, SPC for a project, public-private consolidation, or a combination thereof.

Through the project coordinator 61, the funds acquired through each of the second securities 20E to 20G are distributed to the contractor 66 of repair project of toll bridge X, the contractor 67 of redevelopment of the town Y (construction of a large shopping mall), and the contractor 68 of redevelopment of the town Z (construction of a new housing development) and used for each work. In this example, the funds acquired for the repair project of toll bridge X using the second securities 20E are not used for other projects (redevelopment of the town Y (construction of a large shopping mall) and redevelopment of the town Z (construction of a new housing development)). The enterprise 65 or the like pays the interest to the investors 63 through the financial institution/securities firm 62. When paying the interest, the enterprise 65 or the like pays the resources to the financial institution/securities firm 62, and the financial institution/securities firm 62 pays the interest to the investors 63. In addition, the dividends will be paid when the project generates profit. Further, the projects described above may be evaluated by a third-party institution at least once every fiscal year.

The interest rate of the second securities 20 may be a variable interest rate that is pegged to the market interest rate. The second securities 20 pay dividends to the investors as a share of profit of the project.

The guaranteed rate of second securities 20 may be changed during the project according to conditions such as performances. For example, an initial guaranteed rate of 70% may be increased to 80%, decreased to 60%, or changed to 0%. The guaranteed rate may be changed when converting a first security 10 into a second security 20.

### <3-4. Advantages of Second Securities>

The second securities 20 facilitate acquisition of a great amount of private funds for the project of repair of the toll bridge X and redevelopment of towns on both banks. In addition to the repair project of the toll bridge X, a large shopping mall and a residential town, such as a housing development, may be constructed as part of the redevelopment of the towns Y, Z on both banks. Accordingly, more people use the toll bridge X to travel between the large shopping mall in the town Y and the residential town Z. Further, the real-estate values in the towns Y, Z on both banks of the toll bridge X may increase, allowing the enterprise, project coordinator, and the like to obtain development profit by selling the land in lot. Such profit may be used for the dividends of second securities 20. Some public works are unprofitable. By broadening the scope of a project funded through the second securities 20, as is the case of the project of repair of toll bridge and redevelopment of towns on both banks shown in Fig. 18, an unprofitable project can be included into a profitable project. Such a project, as a whole, improves administrative services. Further, the second securities 20 include the non-guaranteed portion, on which dividends are paid. This encourages the security holders to actively participate in the project in hopes of success of the project.

Since the second securities 20 are guaranteed, their market prices in the securities market where second securities 20 are sold and purchased are unlikely to decrease significantly. In addition, factors such as increased real-estate values may increase the prices of the second securities 20 in the securities market. Increases in the prices of the second securities 20 allow the investors to earn profit on sale. Although the interests tend to decrease as the price of the bond increases, the investors can earn profit by selling the second securities 20 in the market.

Instead of a bridge, a repair project may be targeted at a large airport, such as a hub airport, and a hub port.

### <4. Securities Issuing System>

### <4-1. System Configuration>

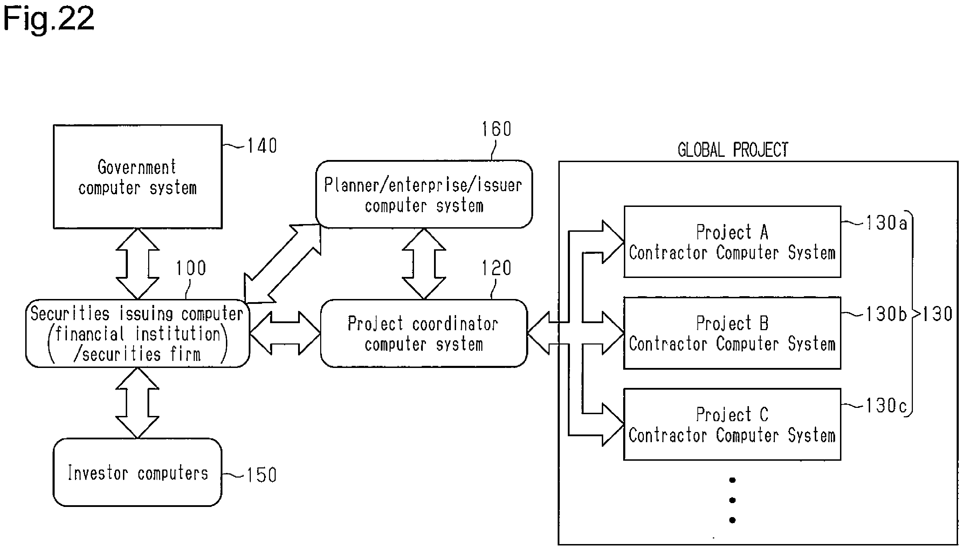

As shown in Fig. 22, the securities issuing system includes a securities issuing computer 100, a project coordinator computer system 120, a contractor computer systems 130a, 130b, 130c..., and a government computer system 140. The securities issuing computer 100 may be managed by a financial institution/securities firm and issues first and second securities 10, 20 according a project. The project coordinator computer system 120 coordinates the entire project. The contractor computer systems 130a, 130b, 130c... construct respective projects that constitute the comprehensive project. The government computer system 140 is a computer system of a government such as a national or local government that serves as the guarantor of the first and second securities 10, 20. The computer systems 100, 120, 130, 140 are connected to one another via a network.

The contractor computer systems 130 also include the computer systems of the contractors that operate facilities. The computer systems 100, 120, 130, 140 may distribute computation over a plurality of computers and processors. The network may include a private communication line or a public communication line that is used as a virtual private network (virtual private communication line). For example, the Internet Virtual Private Network (VPN) may be used that encapsulates and transmits encrypted data via the Internet using a protocol such as Point to Point Tunneling Protocol (PTP) or Secure Sockets Layer (SSL). Alternatively, a private network offered by an Internet service provider (ISP) or a CATV network may be used.

An investor computer 150 is connected to the securities issuing computer 100 of the financial institution/securities firm through the network and sends the securities issuing computer 100 a purchase order for first and second securities 10, 20 on the market through a web page on the Internet or digital broadcasting programs, such as TV shopping programs. As the investor computer 150, an institutional investor may use a high-performance computer, such as workstation, and a private investor may use portable or smaller information processing terminal, such as a general desktop computer, laptop computer, smartphone, and cellular telephone. Alternatively, a digital television receiver with the data communication function may be used.

The project coordinator computer system 120, contractor computer system 130, and government computer system 140, which may be workstations, exchange data with one another via a network. The project coordinator computer system 120 manages the entire project. In the planning phase, the approximate funds required for each project approximate work period of each project, and approximate total funds required for the projects are determined based on various data. The data on the funds and the like for each project is sent via the network to the securities issuing computer 100 of the financial institution/securities firm that issues the first and second securities 10, 20. The project coordinator computer system 120 also uses such data to determine the guaranteed rate (e.g., 70% or 80%) and sends the rate to the government computer system 140 and the like. After construction work in each project is initiated, the project coordinator computer system 120 exchanges data with the project coordinator computer system 120 and manages the progress of each of the individual projects that constitute the comprehensive project.

That is, the project coordinator computer system 120 retrieves various data from the contractor computer systems 130, which are on the worksite side of the projects. This allows the securities issuing computer 100 of the financial institution/securities firm and the project coordinator computer system 120 to devise a funding plan and design the first and second securities 10, 20.

### <4-2. Securities Issuing Computer>

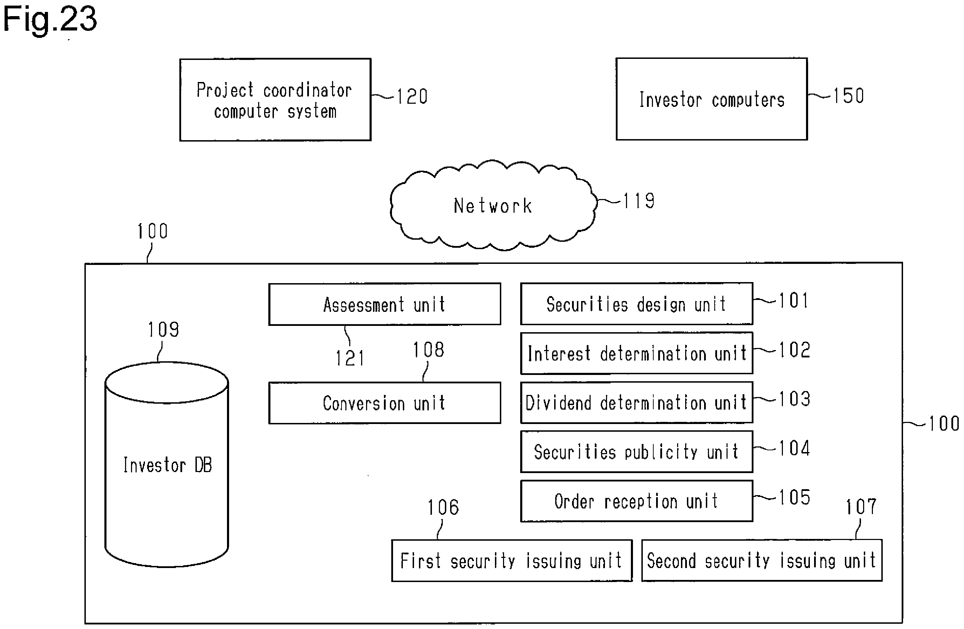

Referring to Fig. 23, the securities issuing computer 100 is a high-performance computer, such as a workstation, and includes components such as a processor, hard disc, memory, and communication interface. The securities issuing computer 100 realizes crowdfunding, which allows an indefinite number of investors to fund an individual or organization often through the Internet, so that an enterprise can acquire funds. The securities issuing computer 100, when software is installed, may function as a securities design unit 101, interest rate determination unit 102, dividend determination unit 103, securities publicity unit 104, order reception unit 105, first securities issuing unit 106, second securities issuing unit 107, conversion unit 108, investor database 109, and assessment unit 121.

The securities design unit 101 exchanges detailed data on the comprehensive project and individual projects with the securities issuing computer 100 of the financial institution/securities firm and the project coordinator computer system 120 and designs the first and second securities 10, 20 to be issued. Based on the detailed data on the comprehensive project and individual projects, the securities design unit 101 determines the amount of funds to be acquired, that is, the total amount of issuance. The total amount of issuance may be obtained by reverse calculation from the projects, that is, by adding up the funds needed to implement the projects. In addition, the securities design unit 101 determines the enterprise 12, 22, face value 13, 23, redemption limit 14, 24, guaranteed rate 15, 25, guarantor 16, 26, and interest rate (annual interests) 17, 27 to design the first and second securities 10, 20. For example, for first securities 10, the securities design unit 101 determines the redemption limit 14 and set dividends 18. For second securities 20, the securities design unit 101 does not set a redemption limit 24 but sets dividends. First and second securities 10, 20, that do not pay dividends or have an interest rate of 0%, may also be designed. Further, first securities 10 are not required to have a redemption limit.

The interest rates (annual interests) 17, 27 of the first and second securities 10, 20 may be determined by factors such as the ratings of the enterprise and guarantor of the project (probabilities of fulfillment of obligation), redemption limit (a longer limit reduces the probabilities of fulfillment of obligation), current level of interest rate, necessary funds calculated backward from the project, and contents of the project. As such, the interest rate determination unit 102 determines the interest rates (annual interests) 17, 27 of the first and second securities 10, 20 based on the data on the ratings of the enterprise and guarantor, which may be obtained from a rating company, the period between the issuance and maturity, current level of interest rate, and data on hearing of investor opinions. The interest rate may be fixed or variable.

After the first and second securities 10, 20 are issued, dividends 18, 28 are paid to the investors. The dividend determination unit 103 determines the amount of dividend to be paid to the investors who own the first and second securities 10, 20 based on the data such as the financial statements sent from an enterprise computer system 160. For example, the dividend determination unit 103 determines the amount of dividend for each of the first and second securities 10, 20 based on the data on surplus balance in the financial statements and pays the amount to each investor, that is, updates the account data of the investor.

The securities publicity unit 104 presents the information on the first and second securities 10, 20 on the market. Specifically, various securities including the first and second securities 10, 20 may be presented on web pages of the financial institution or securities firm that sells the securities. For example, the first and second securities 10, 20 may be presented in text, images, or video data. To gain access to a web page where securities are sold, an investor enters a user ID and password to log into the web page using the investor computer 150. For example, the securities publicity unit 104 is connected to investor computers 150 by a network 119 such as the Internet. The securities publicity unit 104 and investor computers 150 may be connected using a secure protocol such as Secure Sockets Layer (SSL), which combines security technologies including public key encryption, secret key encryption, digital certificate, and hash function in order to prevent tapping or falsification of data and impersonation. Further, the securities publicity unit 104 may monitor the number of visitors to each of the web pages of respective securities by tracking which web pages of respective securities are visited by investors after login and managing logs on browsing start time and browsing end time, for example. Listing the securities in descending order of visitors allows comprehension of the popularities of securities. That is, the securities with more visitors can be considered as more popular securities. Investors who visit the web pages can use such popularity and the ratings of securities as reference information when selecting securities.

In addition to presenting the first and second securities 10, 20 on web pages of financial institutions and securities firms, the securities publicity unit 104 may present securities including the first and second securities 10, 20 in TV shopping programs, for example. That is, the securities publicity unit 104 may present details on the purposes of the funds acquired through the first and second securities 10, 20 on web pages and TV shopping programs so that investors can clearly understand how the funds acquired through the purchased securities will be used. This allows the investors to fully understand the contents of the projects before purchasing first and second securities 10, 20 and, after purchasing the securities, observe whether the acquired funds are used appropriately. This encourages the investors to actively participate in the projects. The securities publicity unit 104 present detailed contents of the projects of the first and second securities 10, 20 to investors so that the investors and the enterprise (project coordinator) can share the same information (symmetric information).

The order reception unit 105 receives purchase order data from investor computers 150 for the first and second securities 10, 20 that have been presented by the securities publicity unit 104. The first and second securities 10, 20 may be sold and purchased in new markets such as stock markets and bond markets. In this case, the order reception unit 105 receives sell order data from investor computers 150. When receiving purchase order data for the first securities 10 presented by the securities publicity unit 104 from an investor computer 150, the first securities issuing unit 106 issues a first security 10 to the investor who has sent the purchase order data. When receiving purchase order data for the second securities 20 presented by the securities publicity unit 104 from an investor computer 150, the second securities issuing unit 107 issues a second security 20 to the investor who has sent the purchase order data.

The conversion unit 108 executes a process for converting a first security 10 into a second security 20. As described above, a first security 10 may be a convertible security so that if conversion right exercise data is received when the redemption limit is reached or during the predetermined period before the redemption limit, the first security 10 is converted into a second security 20 upon redemption. When the investor who owns the first security 10 exercises the conversion right to convert the first security 10 into second security 20, the first security 10 is extinguished and leaves a second security 20. When such first securities 10 are issued and the conversion unit 108 receives conversion right exercise data from an investor computer 150, the conversion unit 108 converts the first security 10 of the investor into a second security 20.

Depending on the conditions of the first security 10, the conversion right may be exercised at any time before the redemption limit if it is permitted, or may be exercised when the redemption limit is reached if the conversion right is permitted to be exercised only at the redemption limit. If the period for exercising conversion right is predetermined, the conversion right is exercised during the predetermined period. When receiving conversion right exercise data from an investor computer 150, the conversion unit 108 accepts the data and checks the conversion right exercisable period of the first security 10 associated with the conversion right. If the data is received within the conversion right exercisable period, the conversion unit 108 executes a process for converting the first security 10 into the second security 20 at the conversion time. When receiving conversion right exercise data from an investor computer 150 outside the conversion right exercisable period, the conversion unit 108 sends data on rejection of exercise of the conversion right to the investor computer 150.

In addition to conversion of a first security 10 into a second security 20, the conversion unit 108 may change the guaranteed rate (guaranteed limit) 15 of a first security 10, for example, when the redemption limit is reached or at the predetermined time before the redemption limit. Further, the conversion unit 108 may replace the entire bond portion shown in Fig. 3 of a first security 10 with the investment portion, in other words, set the guaranteed rate to 0%. Furthermore, the conversion unit 108 may change the interest rates of first and second securities 10, 20. The interest rates may be changed at predetermined time intervals.

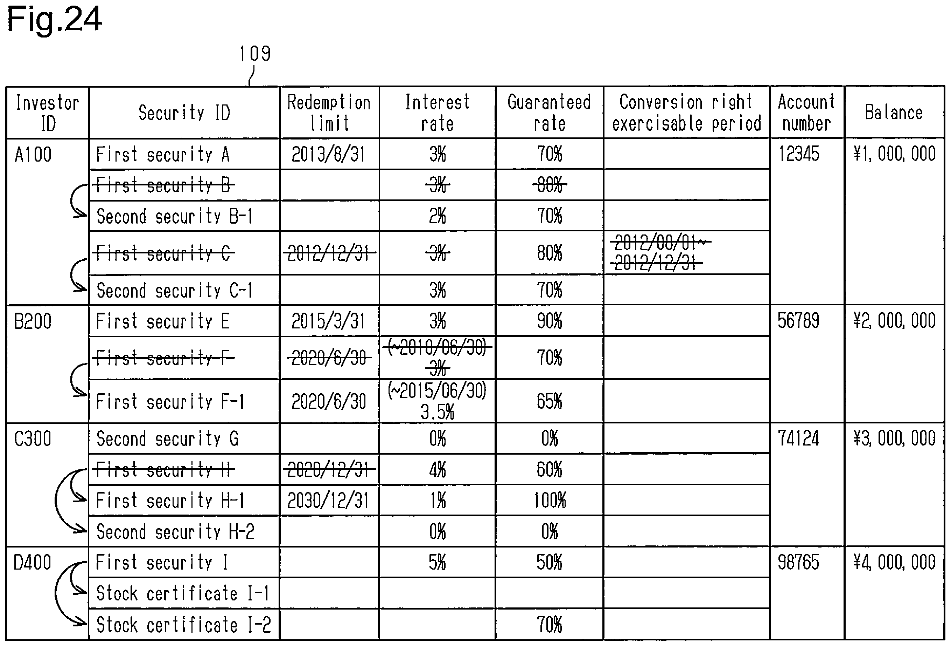

Referring to Fig. 24, the investor database 109 includes a large-capacity hard disk. The investor database 109 manages an investor ID assigned to each investor, security IDs associated with each investor ID, and the redemption limit, conversion right exercisable period, account number, and balance data of the security associated with each security ID.

For example, an investor "A100" currently owns a first security A, a second security B-1, and a second security C-1. The redemption limit of the first security A is August 31, 2013. The account number is "12345", and the balance is 1,000,000 yen. The second security B-1 has an interest rate of 2% and a guaranteed rate of 70%, which were changed from 3% and 80%, respectively, when the predetermined period has elapsed since the issuance of the first security B. Alternatively, the interest rate may be increased from 3% and the guaranteed rate may also be increased. The first security C, which is a convertible security, has been converted into the second security C-1 by exercising the conversion right. The guaranteed rate was changed from 80% to 70% when the first security C was converted into the second security C-1. The interest rate may also be changed at the time of conversion. The interest rate may be reduced when the project is profitable. When an investor purchases a new first or second security 10, 20, the purchased security is registered into the investor database 109, and a security is deleted from the database when sold.

An investor "B200" currently owns a first security E and first security F-1. The first security F-1 was initially issued as the first security F having an interest rate of 3%, and the interest rate was increased to 3.5% on July 1, 2010 when a preferential rate for long-term holders was applied. The guaranteed rate of the first security F-1 was decreased to 65% accordingly. For example, the first security F-1 is set such that the interest rate increases by 0.5% every five years. The interest rate will thus be 4% from July 1, 2015 to maturity on June 30, 2020. In addition, the guaranteed rate decreases in steps and will be 60% from July 1, 2015 to maturity on June 30, 2020.

An investor "C300" currently owns a second security G. The interest rate and guaranteed rate of the second security G are both 0%. The lack of interest of the second security G is compensated by the increased dividend so that the profit is distributed to the investor. The second security G may be a security that has been converted from a first security. The second security G, which is not guaranteed and pays dividends only, is very similar to stock certificates but differs from stock certificates in that the second security G does not grant the investor "C300" a position equivalent to that of a stockholder. The first security H was divided into a first security H-1 and a second security H-2 by exercising the conversion right. For example, when the guaranteed rate of the first security H (face value of 1 million yen) is 60%, the first security H-1 has a face value of 0.6 million yen, a guaranteed rate of 100%, and carries an interest rate of 1%. (The first security H may or may not pay dividends. The interest rate tends to be low when the guaranteed rate is 100%.) The second security H-2 has a face value of 0.4 million yen, a guaranteed rate of 0%, and pays dividends. (The second security H-2 may or may not pay interest.) The contents of the first security H were divided such that the guaranteed portion forms the first security H-1 and the non-guaranteed portion forms the second security H-2.

An investor "D400" currently owns a first security I. The first security I has an interest rate of 5% and a guaranteed rate of 50% when issued. When the conversion right was exercised, the first security I was converted into a stock certificate I-1. The stock certificate I-1 is a normal stock certificate, which gives the investor "D400" a position as a stockholder. The first security I may be converted into a stock certificate I-2. The stock certificate I-2 gives the investor D400 a position as a stockholder in the similar manner as a normal stock certificate. In addition, the stock certificate I-2 is a guaranteed stock certificate, and the amount corresponding to the predetermined proportion (e.g., 70%) of the face value of the stock certificate or the market price at the time of conversion from the first security 10 is guaranteed by at least one third party involved in the issuance of the first and second securities 10, 20. If the issuing entity defaults and/or becomes unable to pay interest, at least one third party that is involved in the issuance of first security I returns the investor D400 who own stock certificate I-2 the predetermined proportion (e.g., 70%) of the face value of the stock certificate or the market price at the time of conversion.

The investor database 109 updates the balance data when a security is purchased or sold or interest or dividend is paid.

### <4-3. Securities Issuing Process>

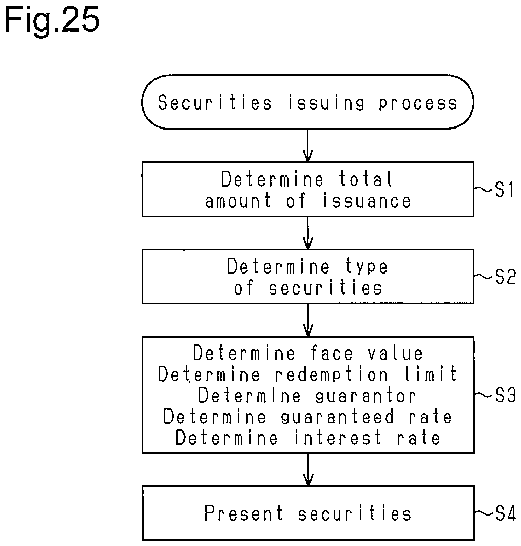

Referring to Fig. 25, the securities issuing computer 100 configured as described above issues new first and second securities 10, 20. Specifically, in step S1, the securities design unit 101 determines the amount of money to be acquired, which is the total amount of issuance, based on the detailed data on the comprehensive project and individual projects.

In step S2, based on the contents of the project, the securities design unit 101 determines whether to issue first securities 10 or second securities 20. If first securities 10 are to be issued, the securities design unit 101 selects between convertible first securities 10 that can be converted into second securities 20 and normal first securities 10 that are not convertible.

After determining the type of securities to be issued, the securities design unit 101 designs the first and second securities 10, 20 in step S3 by determining the enterprise 12, 22, face value 13,23, redemption limit 14, 24, guaranteed rate 15, 25, guarantor 16, 26, and interest rate (annual interest) 17, 27. For example, for first securities 10, the securities design unit 101 determines the redemption limit 14 and set the first securities 20 to pay dividends 18. For second securities 20, the securities design unit 101 does not set a redemption limit 24 and sets the second securities 20 to pay dividends 28. Further, the interest rate determination unit 102 determines the interest rates (annual interests) 17, 27 of the first and second securities 10, 20 based on the data on the ratings of the enterprise and guarantor, which may be obtained from a rating company, the period between the issuance and maturity, current level of interest rate, and data on hearing of investor opinions.

In step S4, the securities publicity unit 104 presents information on the first and second securities 10, 20 on the market. Specifically, web pages are used to present the contents of each type of first securities 10 as shown in Figs. 7, 9, 11, 12 and 13 and the contents of each type of second securities 20 as shown in Figs. 14, 16, 18 and 20. Such web pages include a purchase button for each type of securities, which allows an investor to purchase a desirable security by clicking the corresponding purchase button using the investor computer 150. Such web pages permit access from the investor computer 150 when the user ID and password entered by the investor computer 150 are validated.

### <4-4. Security Purchase Order Handling>

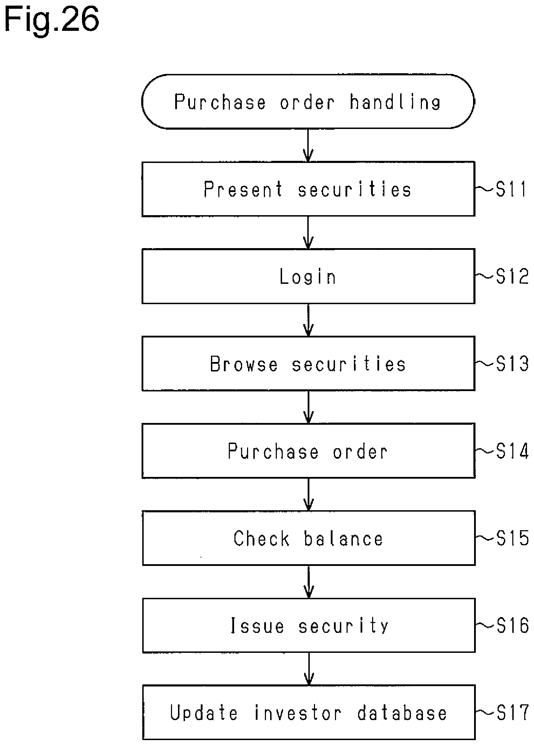

Referring to Fig. 26, the handling of purchase order for first and second securities 10, 20 will now be described. In step S11, the securities publicity unit 104 of the securities issuing computer 100 presents securities on the market including the first and second securities 10, 20 on web pages. In step S12, when receiving a user ID and password from an investor computer 150, the securities publicity unit 104 performs login process by checking the received user ID and password against the user IDs and passwords registered in the database. When validated, the investor computer 150 is permitted access so that the investor can browse the web pages using the investor computer 150 in step S13. This allows the investor to browse through various web pages introducing the first and second securities 10, 20 and find a desirable security.

In step S14, the order reception unit 105 receives purchase order data together with the investor ID and the security ID to be purchased. Then, in step S15, the order reception unit 105 accesses the investor database 109 to check the balance in the account of the investor. In step S16, if the security is still available for issuance and the balance in the account is greater than the order amount, the security is issued to the investor who has made the order. In step S17, the investor database 109 is updated such that the security ID of the purchased security is associated with the investor ID as shown in Fig. 24. In addition, the investor database 109 updates the account data associated with the investor ID of the investor who has purchased the security to subtract the amount used to purchase the security.

### <4-5. Security Sell Order Handling>

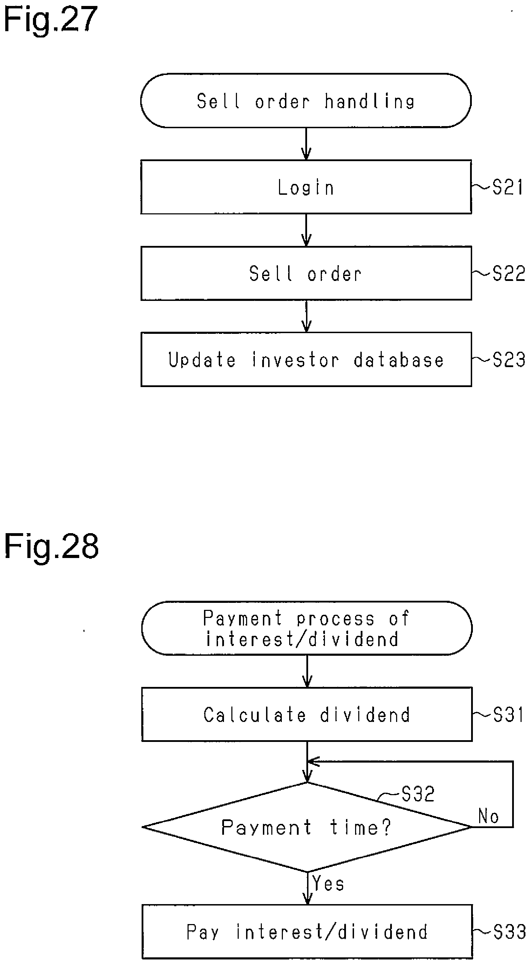

Referring to Fig. 27, the handling of sell order for the first and second securities 10, 20 will now be described. In step S21, an investor who owns a security logs in a web page of the financial institution/securities firm by entering the investor ID and password to gain access to the web page that shows the list of securities owned by the investor. In step S22, the order reception unit 105 receives sell order data together with the investor ID and the security ID of the security to be sold. Then, in step S23, the investor database 109 deletes the security ID of the sold security from the data of the investor, in other words, cancels the association. The investor database 109 updates the account data to add the amount gained by selling the security.

### <4-6. Payment process of Interest/Dividend>

Referring to Fig. 28, payment of interest and dividends of the first and second securities 10, 20 will now be described. When the time of payment of dividends and interest, such as a settlement term, approaches, the dividend determination unit 103 determines in step S31 the amount of dividends to be paid to the investors who owns the first and second securities 10, 20 based on the data such as financial statements sent from the enterprise computer system 160. For example, the dividend determination unit 103 appropriates 10 to 30% of the profit for the dividends and determines the amount of dividend for each of the first and second securities 10, 20. In step S32, the dividend determination unit 103 determines if the time of payment to investors is reached. In step S33, when the payment time is reached, the investor database 109 executes a process for paying the interest and dividend of the first and second securities 10, 20 and updates the account data of each investor. The payment date of interest may differ from the payment time of dividends.

### <4-7. Conversion Process>

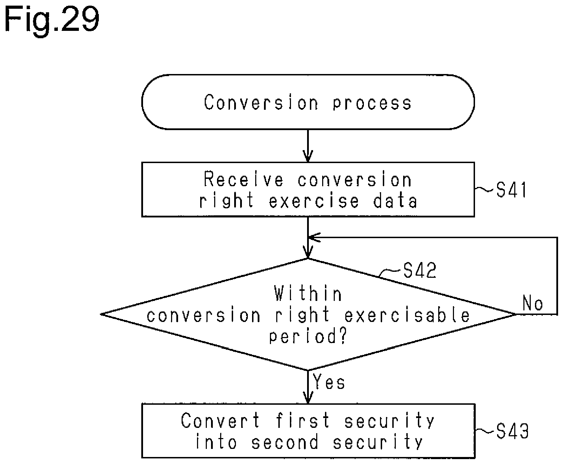

Referring to Fig. 29, a process for converting a first security 10 into a second security 20 will now be described. When an investor who owns a convertible first security 10 exercises the conversion right, the investor sends, from the investor computer 150 to the securities issuing computer 100, conversion rights exercise data that gives instructions for the first security 10 to be converted into a second security 20. In step S41, the conversion unit 108 receives the conversion right exercise data together with the investor ID and security ID from the investor computer 150. In step S42, the conversion unit 108 accesses the investor database 109 to determine whether the data is received within the conversion right exercisable period of the first security 10 that is identified by the security ID associated with the received investor ID. In step S43, if the data is received within the conversion right exercisable period, the conversion unit 108 executes a process for converting the first security 10 into a second security 20 (see the security IDs "First security C" and "Second security C-1" of the investor ID "A100" in Fig. 24) at the conversion time (e.g., when the redemption limit is reached) and updates the investor database 109.

When changing the interest rate, as is the case of the first securities F and F-1 shown in Fig. 24, the conversion unit 108 changes the interest rate when the predetermined time has elapsed. The interest rate and guaranteed rate may be changed at maturity of the first security 10 or when a first security 10 is additionally issued. When changing the guaranteed rate when a first security 10 is converted into a second security 20, the conversion unit 108 changes the guaranteed rate in the similar manner as the first securities C and C-1 shown in Fig. 24. Further, a change process may be executed to divide the first security H into the first security H-1 (guaranteed portion) and the second security H-2 (non-guaranteed portion) as shown in Fig. 24.

### <4-8. Assessment unit>

As shown in Fig. 23, the securities issuing computer 100 may further include an assessment unit 121 that assesses whether first securities 10 should be issued or second securities 20 should be issued. For example, the California high-speed railroad is a long-term or permanent facility and requires renovation of the train line/track facilities or repair of trains or station buildings after one or more decades, as described above. The number of users of a public transportation system such as the California high-speed railroad is relatively easy to estimate, and such a facility is likely to generate stable profit. As for the first securities 10 issued when constructing the California high-speed railroad, for example, when the predetermined time has elapsed since the issuance before the redemption limit is reached, the assessment unit 121 needs to determine the type of the securities to be issued next. Thus, the assessment unit 121 outputs a notification to the project coordinator computer system 120 to prompt entry of assessment items. For example, for the first securities 10 having a redemption limit of ten years, the assessment unit 121 outputs a notification to the project coordinator computer system 120 to prompt entry of assessment items when five years has elapsed since the issuance. When the project coordinator computer system 120 enters the assessment items, the assessment unit 121 determines whether to issue first securities 10 or second securities 20 based on the input. The assessment items may include assessment on whether the facility is a long-term or permanent facility, the actual number of users, predicted number of future users, and predicted profit.

If the assessment unit 121 assesses based on the input that the project will continue to generate stable profit, the assessment unit 121 selects issuance of second securities 20. For example, if the majority of assessment items exceed the prescribed thresholds, the second securities 20 are selected. If the project is less likely to generate stable profit (if a railroad is in the red but needs to be maintained for public service), the first securities 10 are selected. The selection result is sent to the securities design unit 101. The securities design unit 101 designs the details of the first securities 10 or second securities 20 selected by the assessment unit 121. When the redemption limit of the first securities 10 is reached, new first securities 10 or second securities 20 will be issued. Accordingly, the securities issuing computer 100 stably maintains the public transportation systems including the California high-speed railroad, which was initially constructed, using the first and second securities 10, 20. The assessment unit 121 assesses whether to issue first securities 10 or second securities 20 based on the input on assessment items, allowing for objective selection of the type of securities to be issued.

### <4-9. TV Shopping>

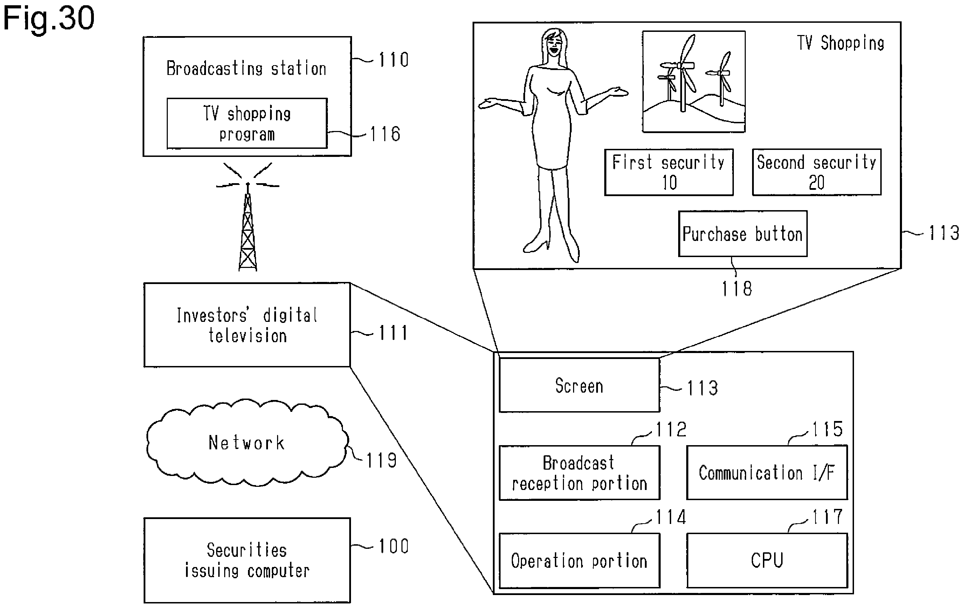

As shown in Fig. 30, the securities publicity unit 104 may advertise the first securities 10 and second securities 20 in a TV shopping program 116. According to a program listing, a digital television receiver 111 shows a TV shopping program 116 that is created in a broadcasting station 110 and advertises the first and second securities 10, 20. The digital television receiver 111 includes a broadcast reception portion 112, which receives and decodes broadcasts, a screen 113, which shows programs, an operation portion 114, which includes a remote control for selecting programs, a communication I/F 115, which is connected to a network 119, and a CPU 117, which serves as a controller for controlling the entire operation.

The broadcast reception portion 112 of the digital television receiver 111 may include an orthogonal frequency division multiplexing (OFDM) demodulation portion that extracts digital signals and sorts transport stream packets (hereinafter referred to as "TS packets"), which are signals in packets, by application. Packets for video/audio are sent to the MPEG2 decode portion where video/audio signals are decoded. Packets for data broadcasting are sent to the CPU 117 where each data is decoded. The CPU 117 shows video signals on the screen and shows the data on data broadcasting processing over the video signals. For example, in a TV shopping program 116, the program data composed of video and audio signals is replayed, and icons 118, such as a button for purchasing the securities that relate to the program data, are shown. As such, the TV shopping program 116 allows investors to easily understand the details of the first and second securities 10, 20 and the projects funded through the first and second securities 10, 20. This allows the investors to know the first and second securities 10, 20 and the project contents to substantially the same extent as the issuer. Investors can use the detailed information for thorough consideration before purchasing the first and second securities 10, 20 (information symmetry between issuer and investors).

An investor who finds a desirable security in the TV shopping program 116 operates an operation button of the operation portion 114 and cricks on a button icon 118 shown on the screen 113 or presses an operation button of the remote control to purchase the desirable security. The communication I/F 115 sends purchase order data together with the investor ID and the security ID of the security to be purchased to the securities issuing computer 100 via the network 119. The digital television receiver 111 may be connected to the securities issuing computer 100 using a protocol such as SSL. When receiving the purchase order data together with the investor ID and the security ID of the security to be purchased, the order reception unit 105 accesses the investor database 109 to check the balance of the account of the investor. If the account balance is greater than the order amount, the order reception unit 105 settles the account and issues a security to the investor who has sent the order.

Compared to web pages, the TV shopping program 116 offers more expression tools to present the first and second securities 10, 20 and thus advertises the first and second securities 10, 20 more efficiently. In addition, the TV shopping program 116 may provide a report on the current state, such as progress, of the project funded through the issued first and second securities 10 and 20. This may achieve information symmetry between the issuer and investors.

Investors may use the digital television receiver 111 as a terminal to send the securities issuing computer 100 a purchase or sell order of first and second security 10, 20 and conversion right exercise data that gives instructions for a first security 10 to be converted into a second security 20.

### <5. Other Use Examples of First and Second Securities>

### <5-1. Reconstruction Securities and Tourism Securities>

The Indian Ocean earthquake in 2004 had a magnitude of 9.1 and caused severe damage to Southeast Asian countries around the epicenter, including Indonesia, India, Sri Lanka, Thailand, Myanmar, Malaysia, and the Maldives. The earthquake off the Pacific coast of To̅hoku in Japan on Friday 11 March 2011, the resulting tsunami, and aftershocks caused extensive natural disaster. In the United States, hurricanes brought flood disasters in areas such as New Orleans, and extreme tornadoes severely damaged areas such as Oklahoma.

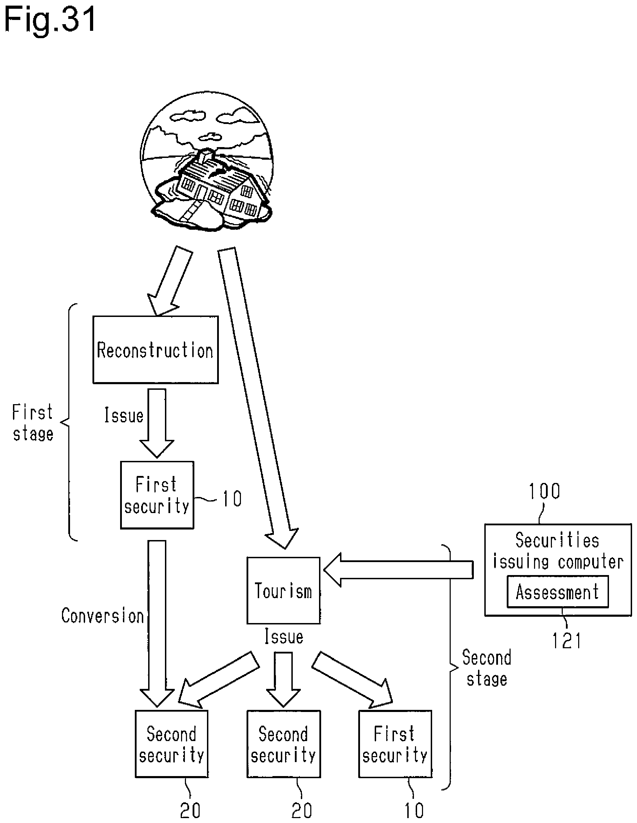

As described above, the purpose of issuance of first and second securities 10, 20 can be set freely by the issuers and project coordinators. Thus, first and second securities 10, 20 that are classified by purpose for dealing with natural disasters may be issued, as shown in Fig. 31. For example, first and second securities 10, 20 may be issued for reconstruction of local infrastructure, and other first and second securities 10, 20 may be issued for tourism and used to construct tourism facilities. The first and second securities 10, 20 may be issued by each country. Alternatively, a World Bank group such as the International Bank for Reconstruction and Development, European Bank for Reconstruction and Development, Nordic Investment Bank, Inter-American Development Bank, or the like may issue the first and second securities 10, 20 for reconstruction and tourism spanning over multiple countries. In this case, the guarantors may be a World Bank group or the countries in which reconstruction or tourism projects take place. Further, guarantors may be a public-private consolidation and a plurality of contrives. The issuing country may be a third country other than the affected country and the country or the local authority of the disaster area. For example, the first and second securities 10, 20 for reconstruction and tourism in Southeast Asian countries may be issued by a third country, such as the United States.

The first project needed after a disaster is the reconstruction of the local infrastructure (the first stage). Then, as the construction of infrastructure reaches the final phase, a tourism project, such as development of new tourism resources, will be initiated for the development of the affected area (the second stage). In the first stage, first securities 10 for the reconstruction project are issued. For example, when first securities 10 are issued for a broad purpose of reconstruction, the first securities 10 have a longer redemption limit of 10 or 20 years. When first securities 10 are issued for recovery of critical infrastructure, such as electricity, gas, and water supply, the first securities 10 have a shorter redemption limit of 1, 2 or 5 years since the construction works take relatively short time. Such first securities 10 may be classified by purpose and have various redemption limits in accordance with the reconstruction project plan.

When the predetermined time has elapsed since the start of reconstruction project, a tourism resources development project is initiated in the second stage. Since the tourism project is expected to generate profit, second securities 20 are issued. The issued first securities 10 may be designed to be convertible into the second securities 20 for the tourism project when such second securities 20 are issued. At this time, new second securities 20 for a new tourism project may be issued successively. The first securities 10 may also be issued again at this time.

When issuing first and second securities 10, 20, one or more types of first securities 10 only may be issued, one or more types of second securities 20 only may be issued, or first securities 10 and second securities 20 may be issued in combination.

When the project transitions from the first stage to the second stage, the assessment unit 121 of the securities issuing computer 100 may assess whether to issue first securities 10 or second securities 20 in the second stage. For example, tourism facilities include short-term facilities, which are likely to lose appeal to tourists after a while, and long-term facilities, which can attract tourists for a long time. When the redemption limit of the first securities 10 approaches, second securities 20, which do not have a redemption limit, are issued for a long-term facility, which is expected to generate profit for a long time, and the first securities 10 are issued for a short-term facility, which is likely to lose its appeal after a while and thus unlikely to generate profit for a long time, to effect transition to the second stage. Ideas for the types of tourism facilities to be constructed in the second stage may be solicited through TV shopping programs and websites using the securities publicity unit 104.

When the assessment items including the purpose and application of the facility are entered, the assessment unit 121 assesses whether to issue first securities 10 or second securities 20 in the second stage based on the assessment items. For example, according to the input of assessment items, the assessment unit 121 selects first securities 10 when the facility is assessed to be a short-term facility and selects second securities 20 when the facility is assessed to be a long-term facility. When the predetermined time has elapsed since the issuance of the first securities 10 in the first stage before the redemption limit is reached, the securities issuing computer 100 needs to determine the type of securities to be issued in the second stage and thus outputs a notification to the project coordinator computer system 120. For example, when five years has elapsed since the issuance of the first securities 10 that are issued in the first stage and have a redemption limit of ten years, that is, when the redemption limit approaches, the securities issuing computer 100 outputs a notification to the project coordinator computer system 120 to prompt selection of the type of securities to be issued in the second stage. When the project coordinator computer system 120 enters the assessment items, the securities issuing computer 100 determines whether to issue first securities 10 or second securities 20 based on the input. In addition to whether the facility is a long-term facility or a short-term facility, factors such as the predicted number of users and predicted profit may be considered for assessment.

The assessment unit 121 outputs the result to the securities design unit 101, and the securities design unit 101 designs the details of the first securities 10 or second securities 20 determined by the assessment unit 121. When the redemption limit of the first securities 10 in the first stage is reached, first securities 10 or second securities 20 for the second stage are issued. This allows the securities issuing computer 100 to automatically and objectively determine whether to issue first securities 10 or second securities 20 when the project transitions from the first stage to the second stage. In the second stage, both first securities 10 and second securities 20 may be issued.

### <5-2. City Rebuilding Securities>

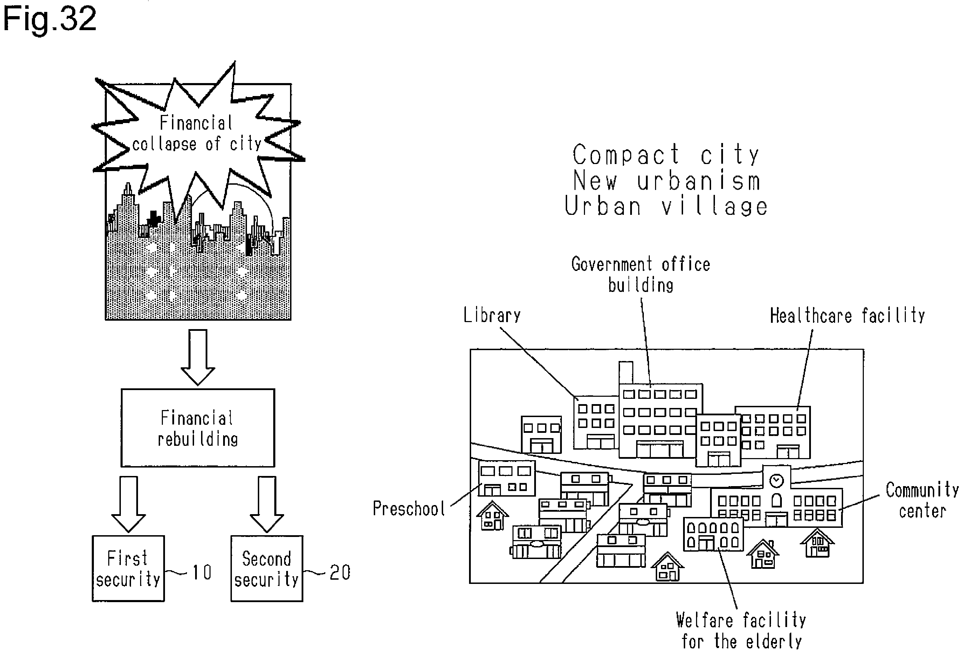

Referring to Fig. 32, a city that is financially failed (for example, Yubari city in Japan (became bankrupt in 2007)) is generally restricted from issuing local government bonds. In order to transfer the balance shortfall, such a city is only exceptionally allowed, with permission from the minister of internal affairs and communications, to issue local government bonds whose redemption limit comes within the period of financial rebuilding plan (rebuilding transfer special bonds). Detroit in the United States also became bankrupt in 2013.

Financial rebuilding of a local government requires funds. The cities that require financial rebuilding often have declining birth rate and a growing proportion of elderly people, which causes decline in population. Polities for rebuilding of such cities include urban policies such as compact city, new urbanism, and urban village. These urban policies aim to limit expansion of the city toward the suburbs, place city functions such as administration, healthcare service, education, and transportation in the central area, energize the main town, and enhance convenience for city residents. In line with this concept, large commercial facilities and public facilities (e.g., welfare facilitates and hospitals) should be relocated to the city center, greater importance should be given to pedestrians and bicycles as transportation means over cars, and the roads and other structure should by improved accordingly. Further, small-scale public transportation systems, such as trolley cars, and building co-operatives (cooperative collective housing) should be provided. For example, light rail transit (LRT) may be used as a public transportation system.

For such purposes, a local government aiming for financial rebuilding may issue first and second securities 10 and 20 that are classified by purpose, such as the first securities 10F to 10H in Fig. 11, first securities 10I to 10K in Fig. 12, and first securities 10L to 10N in Fig. 13. That is, various types of first and second securities 10, 20 with respective purposes, such as construction of healthcare facility, welfare facility, educational facility, research facility, public transportation system, and cooperative housing, may be issued. This allows the local government that needs financial rebuilding to efficiently acquire private funds, construct an attractive city, and achieve financial rebuilding. In this case, the issuer may be the local government or a public-private consolidation, and the guarantor may be the national government or a public-private consolidation. When issuing first and second securities 10, 20, one or more types of first securities 10 only may be issued, one or more types of second securities 20 only may be issued, or first securities 10 and second securities 20 may be issued in combination.

To repair the facility that was newly constructed or renovated using first securities 10 for achieving a compact city, the funds for the repair are acquired using first and second securities 10, 20. When the predetermined time has elapsed since the issuance of the first securities 10 in the first stage, the assessment unit 121 of the securities issuing computer 100 assesses for each facility to be renovated whether to issue first securities 10, second securities 20, or both first securities 10 and second securities 20 so as to acquire funds necessary for repair in the second stage. The first securities 10 issued in the first stage may also be converted into second securities 20.

### <5-3. Regional Development Securities>

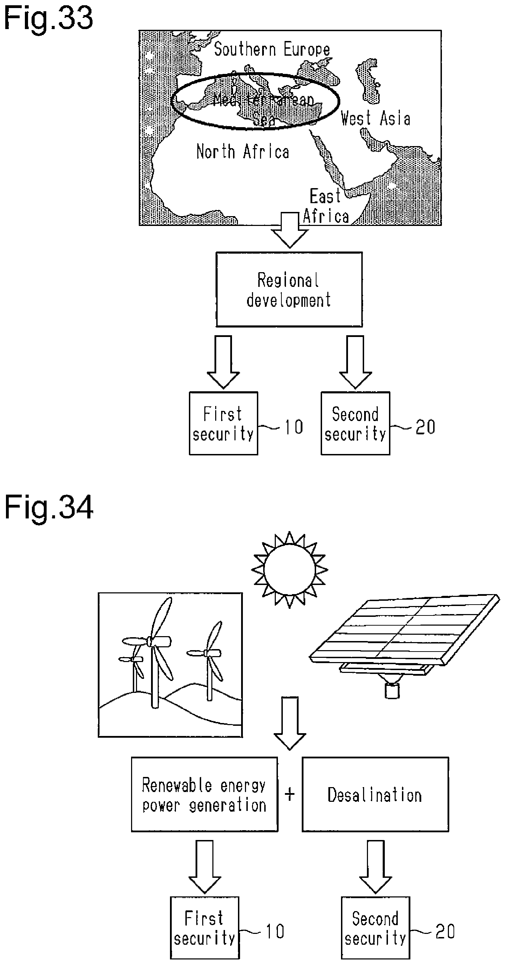

Referring to Fig. 33, regions along the Mediterranean coast are mild in climate, and coastal regions in southern Europe have developed as resorts. In contrast, North Africa on the opposite side has many undeveloped regions in spite of its mild climate. The first and second securities 10, 20 described above may be used for development of North African regions. When issuing first and second securities 10, 20, one or more types of first securities 10 only may be issued, one or more types of second securities 20 only may be issued, or first securities 10 and second securities 20 may be issued in combination. Since such a project extends over multiple countries, the issuing country may be a country in North Africa to be developed, a third country with large economies, a World Bank group, European Bank for Reconstruction and Development, Nordic Investment Bank, African Development Bank, Inter-American Development Bank, or a public-private consolidation. Further, the guarantor may be a country where a facility is to be built, a World Bank group, European Bank for Reconstruction and Development, Nordic Investment Bank, Inter-American Development Bank, or a public-private consolidation.

For example, high-speed railroads may be constructed along the Mediterranean coast in southern Europe and North Africa, or high-speed boats may be provided that include the screw propeller propulsion system or water jet propulsion system and cruise between cities along the Mediterranean coast. This may facilitate traveling between these regions and economic integration. For such projects, the first and second securities 10, 20 may be issued to provide high-speed railroads or high-speed boats. In addition, cities along the high-speed railroads and cities where the high-speed boats stop may be developed to facilitate migration of southern European and North African people into new cities. The first and second securities 10, 20 may raise funds for such urban development. The economic reconstruction and integration of economic zones in North Africa, as well as in southern Europe may thus be achieved. The urban development and construction of transportation infrastructure that spans over a wide area are not limited to the Mediterranean coast in southern Europe and North Africa. For example, such projects are applicable to development in Siberia region in the Eurasian continent and development in West Asia, East Africa, and Eastern Europe, including regions along Persian Gulf, the Red Sea, and the Black Sea.

The high-speed railroad and high-speed boat facilities constructed in regional development may require repair after one or more decades. The funds needed for such repair may be acquired through the first and second securities 10, 20. After the predetermined time has elapsed since the issuance of the first securities 10 in the first stage, the assessment unit 121 of the securities issuing computer 100 assesses whether to issue first securities 10 or second securities 20 to acquire funds for the repair in the second stage. The first securities 10 issued in the first stage may also be converted into second securities 20.

The first and second securities 10, 20 may also be used for the following regional development. For example, the vast wetlands in the Florida Peninsula in the United States suffer environmental deterioration due to the wastewater flowing into the wetlands caused by urban and agricultural developments in the surrounding areas. To restore the conditions, a large-scale project that purifies water using a constructed wetland is in progress or at the planning stage along with a plan of large-scale development of the wetlands. Implementing a large-scale development, while protecting the natural environment, further promotes the tourism project in the region. Such large-scale development may include the construction of high-speed railroad, construction of new cities, and arrangement of national parks. The first and second securities 10, 20 may be used to acquire funds for the restoration and large-scale development of wetlands in the Florida Peninsula.

When issuing first and second securities 10, 20, one or more types of first securities 10 only may be issued, one or more types of second securities 20 only may be issued, or first securities 10 and second securities 20 may be issued in combination. For the project described above, the issuers may be the state of Florida and the United States, and the guarantors may be the state of Florida, the United States, a World Bank group, Inter-American Development Bank, or a public-private consolidation. Further, the issuers and guarantors may include the states around the Florida Peninsula and the Gulf of Mexico, such as the state of Georgia, the state of Louisiana, and the state of Mississippi. The funds for repair needed after one or more decades have elapsed since repair or construction of an existing facility may be acquired through the first and second securities 10, 20.

### <5-4. Energy-Related Securities>

There have been power generation projects that use renewable energy, which is continually or repetitively provided by natural elements such as sunlight, wind power, wave power, tidal power, water flow, tide, geothermal heat, and biomass. In North Africa, in addition to solar panels, large concentrating solar power (CSP) plants have been constructed. In Japan, large-scale wind power systems have been introduced. Such renewable energy is increasingly introduced worldwide for reasons such as rising prices of underground resources, exhaustion of resources, and global warming.

In addition to stable power supply, construction of water supply systems using seawater desalination technology is sought in regions that have water shortage, such as North Africa. Water supply systems may distill seawater into fresh water or pressurize and filter seawater through a filtration membrane such as a reverse osmosis (RO) membrane to remove salt concentrate from seawater and obtain fresh water through filtration. With either of the methods, a water supply system requires stable power supply.

As shown in Fig. 34, first and second securities 10, 20 as described above may be issued for such power generation and desalination. When issuing first and second securities 10, 20, one or more types of first securities 10 only may be issued, one or more types of second securities 20 only may be issued, or first securities 10 and second securities 20 may be issued in combination. If the project takes place in a single country, the issuing country may be this country or a public-private consolidation of the country. Alternatively, the issuing country may be a third country with large economies as described above. If the power generation project spans over multiple countries, the issuing countries may be countries where the project takes place, a third country with large economies, a World Bank group, European Bank for Reconstruction and Development, Nordic Investment Bank, Inter-American Development Bank, or a public-private consolidation. Further, the guarantors may be countries where the project takes place, a third country with large economies, a financial institution such as a World Bank group, African Development Bank, European Bank for Reconstruction and Development, Nordic Investment Bank, or Inter-American Development Bank, or a public-private consolidation.

The energy-related securities may be issued together with the regional development securities desired above. That is, first and second securities 10, 20 that are energy-related securities for the construction of power plant and desalination plant may be issued together with first and second securities 10, 20 that are regional development securities for the construction of transportation infrastructure. This allows for development of North Africa regions, for example, in terms of both energy and transportation infrastructure.

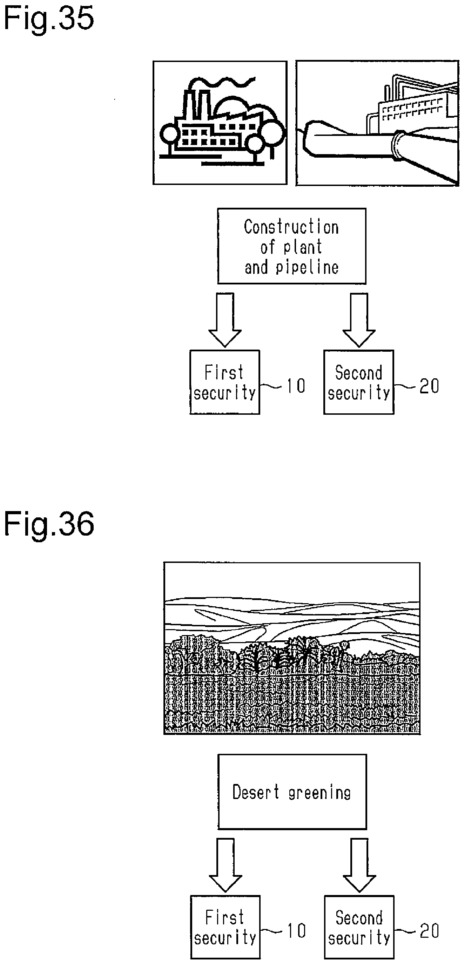

As shown in Fig. 35, the first and second securities 10, 20 may be issued for the construction of industrial plant of resources, such as oil and natural gas, and construction of pipelines for transport. In addition, the first and second securities 10, 20 may be issued for the construction of desalination plant and pipelines for transport. Furthermore, the first and second securities 10, 20 may be issued for the construction of a water collection plant located in a water source and the pipelines from the water collection plant to cities.

The energy-related facilities may require repair after one or more decades. The funds for such repair may be acquired through the first and second securities 10, 20. After the predetermined time has elapsed since the issuance of the first securities 10 in the first stage, the assessment unit 121 of the securities issuing computer 100 assesses whether to issue first securities 10 or second securities 20 to acquire funds for the repair in the second stage. The first securities 10 issued in the first stage may also be converted into second securities 20.

### <5-5. Desert Greening securities>

Greening of deserts has been sought in the African continent and Central Asia, where desertification has been exacerbated. Greening of deserts may involve construction of irrigation facilities and planting. As shown in Fig. 36, the first and second securities 10, 20 may be issued for such greening of deserts. When issuing first and second securities 10, 20, one or more types of first securities 10 only may be issued, one or more types of second securities 20 only may be issued, or first securities 10 and second securities 20 may be issued in combination. If the project takes place in a single country, the issuing country may be this country. Alternatively, the issuing country may be a third country with large economies as described above. It the greening project spans over multiple countries, the issuing countries may be countries where the project takes place, a third country with large economies, a World Bank group, European Bank for Reconstruction and Development, Nordic Investment Bank, Inter-American Development Bank, or a public-private consolidation. Further, the guarantors may be countries where the project takes place, a third country with large economies, a financial institution such as a World Bank group, European Bank for Reconstruction and Development, Nordic Investment Bank, African Development Bank, or Inter-American Development Bank, or a public-private consolidation. If the facilities, such as irrigation facilities, require repair after the predetermined time has elapsed since the construction, first and second securities 10, 20 may be newly issued to acquire funds. After the predetermined time has elapsed since the issuance of the first securities 10 in the first stage, the assessment unit 121 of the securities issuing computer 100 determines whether to issue first securities 10 or second securities 20 to acquire funds for the repair in the second stage. The first securities 10 issued in the first stage may also be converted into second securities 20.

### <5-6. Infrastructure Management Securities>

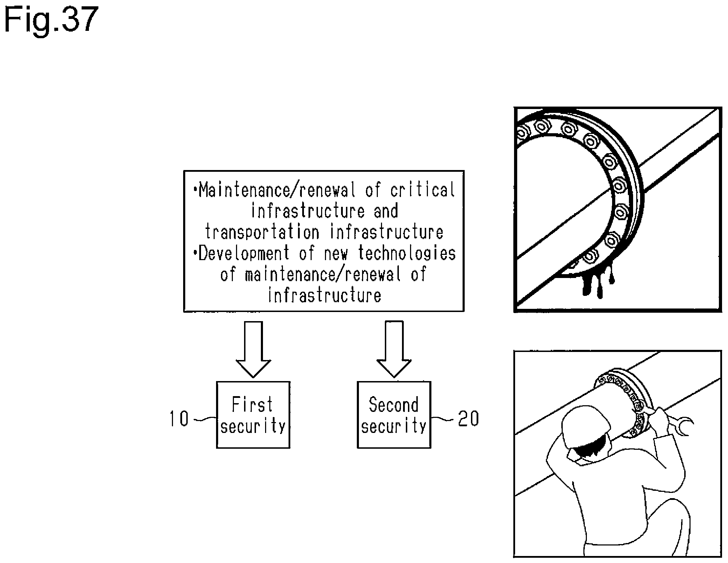

Referring to Fig. 37, in urban cites worldwide including Tokyo, the critical infrastructure such as water supply, sewage, gas, and air conditioning systems including steam pipes may be aging and need maintenance or renewal. The transportation infrastructure such as elevated highways and bridges may also be aging and need maintenance or renewal.

To solve such problems, a new material may be developed that autonomously senses any damage such as a crack in piping for water, sewage, or gas and autonomously repairs the damage. Use of such a material for repair may limit degradation of piping and increase safety and operating life. Further, information communication technologies such as the nondestructive wireless sensor network and data management may be used for infrastructure repair. That is, sensors may be attached to infrastructure, such as bridges and water pipes, to continually monitor the condition and perform structural degradation diagnosis (structural health monitoring). Further, robotics technologies, including remotely operated heavy machinery, may be used to inspect and maintain the infrastructure. These technologies can automatically find damage at an early stage before an accident occurs and enable maintenance such as repair work. This provides advantages including reduced accidents, longer infrastructure life, correction of lack of maintenance staff, and reduced costs. The critical infrastructure and transportation infrastructure, which extend throughout the urban cities, measure a significant length in total, requiring considerable time and costs to repair.

The first and second securities 10, 20 may be used to acquire funds for the maintenance or renewal of infrastructure, development of next-generation infrastructure, and development and introduction of new technologies of inspection and maintenance of infrastructure. The second securities 20 with dividends are preferably issued for the inspection and maintenance of toll roads, such as turnpike, and toll bridges since their traffic amounts are easy to predict and future profits are probable. In this case, the entire extent or a section of a road or bridge may be charged, and the collected money may be used for payment of interest and dividends. In addition, when building a road-side facility like a service area, where people can rest, eat, or have their car refueled, checked, or tuned, the second securities 20 with dividends may be preferably issued. However, the funds may be acquired through the first securities 10 having a redemption limit or through both first and second securities 10 and 20.

For example, the funds for the maintenance or renewal of infrastructure, development of next-generation infrastructure, and development and introduction of new technologies of inspection and maintenance of infrastructure may be acquired through the first securities 10. Then, the second securities 20 may be issued when repairing the infrastructure using the developed technologies, since such infrastructure is likely to generate profit in future. The first securities 10 may be converted into second securities 20 when the predetermined time has elapsed since the issuance.

In contrast, for the maintenance of transportation infrastructure such as toll-free roads and bridges, which are of a more public service nature, the first securities 10 that have a redemption limit and do not pay dividends may be preferably issued. As for the maintenance of critical infrastructure such as water and gas supply, which is profitable since the utilities are collected from the users, the second securities 20 that pay dividends may be issued.

### <5-7. Olympic Games Securities>

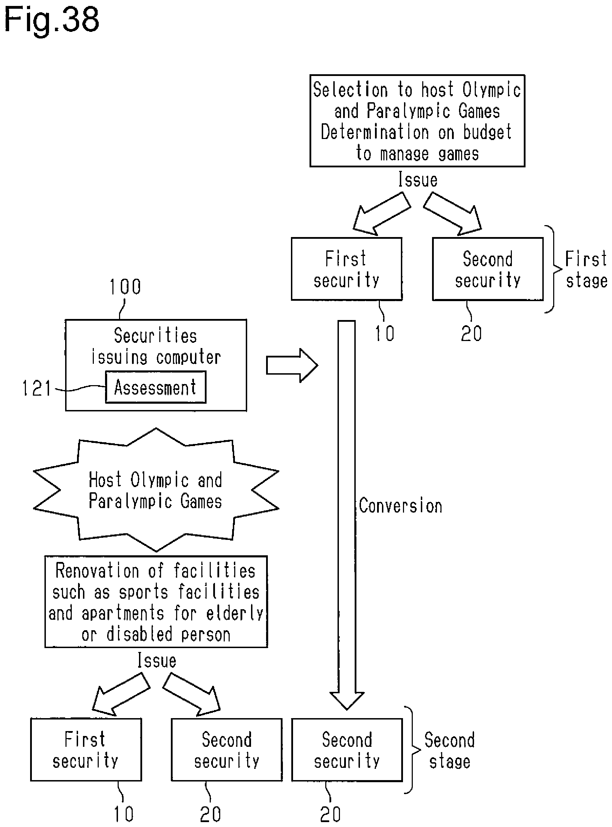

Hosting Olympic and Paralympic Games requires an enormous amount of funds. Thus, a compact plan for games within the central area of the city has been contemplated. In addition, the facilities that are newly built for the games may be used permanently and effectively in order to expand the city functions of the host city. As shown in Fig. 38, when a city is selected for the Olympic Games, a budget is developed that can maximize the benefit of Olympic Games for the host city and country. For example, a budget is developed with consideration given to the use of the Olympic-related facilities after the Olympic Games. The first securities 10 and second securities 20 are then issued according to the budget (the first stage).

For example, when the main venue of the Olympic Games, which is an athletics stadium where track and field and football games are held, is newly constructed, the stadium may be used permanently as the venue for national or international cultural, sport or educational events after the Olympic Games. The Olympic Village provides residences for the participating athletes and the like during the Olympic Games, and the residences may be renovated into condominiums or rental apartments after the games. If the Olympic village includes residences for the athletes participating the Paralympic Games, such residences may be sold as housing for elderly or disabled person.

If the facilities are to be used permanently or for a long time after the Olympic Games and thus there is a probability for long-term profit, the second securities 20 without a redemption limit are preferably issued. However, the first securities 10 may be issued, or both the first and second securities 10, 20 may be issued.

In some cases, not all the newly built or existing Olympic-related facilities are to be maintained, and some may serve as temporary facilities that are to be demolished and removed after the Olympic and Paralympic Games. Such short-term facilities do not generate profit after the Olympic Games, in other words, do not generate profit for a long time. In this case, the first securities 10 with a redemption limit may be preferably issued.

The first securities 10 issued in the first stage may be convertible securities so that an investor may exercise the conversion right upon or before the redemption limit to convert the first security 10 into a second security 20. This allows the investor to continue to receive dividends for a long time. The investor may also sell the converted second security 20.

When renovating a facility that is to be used permanently or for a long time after the Olympic Games, first and second securities 10, 20 may be additionally issued to acquire funds for the renovation (the second stage). When the predetermined time has elapsed since the selection for the Olympic Games or when the Olympic Games end, the assessment unit 121 of the securities issuing computer 100 assesses whether to issue first securities 10 or second securities 20. For example, the assessment unit 121 may select second securities 20 for the renovation of a permanent or long-term facility, and select first securities 10 for the construction of a new short-term facility. Alternatively, both first and second securities 10 and 20 may be issued.

### <5-8. Possible Application of First and Second Securities>

The fiscal investment and loan program is an investment and loan activity that allows for long-term, low-interest funding or large-scale, ultra long-term projects that are politically required but difficult to achieve with private investment. The program does not rely on tax revenue and may acquire funds by issuing investment-and-loan bonds, which are national bonds. The first and second securities 10, 20 may be used to fund the fiscal investment and loan program. Further, the first and second securities 10, 20 may be used in place of public bonds such as national bonds, sovereign bonds, and bonds issued by state, prefecture, or city.

Further, the first and second securities 10, 20 may be used to acquire funds for the construction of a new dam. In addition, the first and second securities 10, 20 may be used to support or purchase a company, as well as to start businesses. In this case, when supporting or purchasing a company, first securities 20 may be issued to acquire funds. Then, when the company that is supported or purchased begins to operate smoothly, second securities 20 may be issued to acquire funds for projects. The first securities 10 may be converted into the second securities 20 when the redemption limit is reached.

In addition to acquiring funds for structural functions such as infrastructure construction, the first and second securities 10, 20 may be used to acquire funds for non-structural functions such as research and development. For example, the first securities 10 with a redemption limit may be used to acquire funds for the initial stage of research and development, and the second securities 20 without a redemption limit may be issued in the latter stage when the commercialization or actual use becomes feasible. Further, the first securities 10 may be converted into second securities 20 when issuing second securities 20.

### DESCRIPTION OF THE REFERENCE NUMERALS

10: first security, 20: second security, 100: securities issuing computer, 110: broadcasting station, 120: project coordinator computer system, 130: contractor computer system, 140: government computer system, 150: investor computer, 160: enterprise computer system

## Claims

1. A securities issuing system comprising:
a securities issuing computer configured to issue a first security for acquiring funds for a new project to construct a new infrastructure, wherein
the first security includes:
a first issuing entity that issues the first security;
a first face value paid to the first issuing entity in exchange for possession of the first security;
a first guaranteed rate that specifies an amount returned to a security holder by at least one third party involved in issuance of the first security if the first issuing entity defaults and/or becomes unable to pay interest, wherein the first guaranteed rate is expressed as a proportion relative to the first face value;
a first interest rate that specifies interest paid periodically to the security holder, wherein the first interest rate is expressed as a proportion relative to the first face value or to a guaranteed portion that is guaranteed with the first guaranteed rate; and
a first dividend that is to be distributed to the security holder after the new project funded through the first security begins to generate profit, wherein the first dividend is at least a portion of the profit and paid on a non-guaranteed portion
other than the guaranteed portion guaranteed with the first guaranteed rate,
the securities issuing computer includes a processing unit that determines the first interest rate and the first dividend, and
the processing unit is configured to issue the first security and, when a predetermined time has elapsed since the issuance of the first security, execute a process for converting the first security into a second security that differs from the first security in type.

2. The securities issuing system according to claim 1, wherein a redemption limit is set for the first security.

3. The securities issuing system according to claim 2, wherein the processing unit is configured to execute conversion into the second security when the redemption limit is reached.

4. The securities issuing system according to claim 2, wherein the processing unit is configured to:
execute a process for converting the first security of the security holder into the second security if the processing unit receives, from an investor computer, conversion right exercise data that gives instructions for the first security to be converted into the second security; and
execute a process for redeeming the first security of the security holder if the processing unit does not receive the conversion right exercise data.

5. The securities issuing system according to claim 2, wherein
a redemption limit is not set for the second security,
the second security includes:
a second issuing entity that issues the second security;
a second face value paid to the second issuing entity in exchange for possession of the second security;
a second guaranteed rate that specifies an amount returned to the security holder by at least one third party involved in issuance of the second security if the second issuing entity defaults and/or becomes unable to pay interest, wherein the second guaranteed rate is expressed as a proportion relative to the second face value;
a second interest rate that specifies interest paid periodically to the security holder, wherein the second interest rate is expressed as a proportion relative to the second face value or to a guaranteed portion that is guaranteed with the second guaranteed rate; and
a second dividend that is to be distributed to the security holder after a project funded through the second security begins to generate profit, wherein the second dividend is at least a portion of the profit and paid on a non-guaranteed portion other than the guaranteed portion guaranteed with the second guaranteed rate.

6. The securities issuing system according to claim 5, wherein the second guaranteed rate is 0%.

7. The securities issuing system according to claim 5, wherein the second interest rate is 0% or differs from the first interest rate of the first security.

8. The securities issuing system according to claim 1, wherein the second security is one of a plurality of securities including a security that guarantees an amount of the guaranteed portion in full and carries a second interest rate and a security that does not guarantee an amount of the non-guaranteed portion and pays a second dividend.

9. The securities issuing system according to claim 1, wherein the second security is a stock certificate.

10. The securities issuing system according to claim 9, wherein an amount corresponding to a predetermined proportion relative to a face value of the stock certificate or to a market price of the stock certificate at a time of conversion from the first security is guaranteed for the stock certificate by at least one third party involved in issuance of the second security.

11. The securities issuing system according to claim 1, wherein the processing unit is configured to change the first interest rate and/or the first guaranteed rate when the predetermined time has elapsed since the issuance of the first security.

12. The securities issuing system according to claim 1, wherein the new project is a project to construct a transportation infrastructure that connects cities.

13. The securities issuing system according to claim 12, wherein the new project includes a project to construct an additional new city between the cities.

14. The securities issuing system according to claim 13, wherein the project to construct a new city includes a project to construct a station in the new city.

15. The securities issuing system according to claim 13, wherein the project to construct a new city includes a project to construct a landmark in the new city.

16. The securities issuing system according to claim 13, wherein the project to construct a new city includes a project to construct an educational facility, a welfare facility, and/or a healthcare facility in the new city.

17. The securities issuing system according to claim 12, wherein
the securities issuing computer is configured to issue a security for acquiring funds for the project to construct a new transportation infrastructure and additionally issue the first security for acquiring funds for a new project to construct an additional new city between the cities, and
the processing unit is configured to determine a first interest rate and a first dividend of the additional first security.

18. The securities issuing system according to claim 1 or 5, wherein
contents of the first or second security and description of the new project for which funds are acquired are presented in a TV shopping program, and
the securities issuing system includes a securities issuing unit that is configured to, when receiving purchase order data sent from a digital television receiver that shows the TV shopping program, issue the first or second security corresponding to the purchase order to an investor who is a viewer.

19. The securities issuing system according to claim 1, wherein a redemption limit is not set for the first security.

20. A method for acquiring funds for a new project to construct a new infrastructure by issuing a first security using a securities issuing computer, wherein
the first security includes:
an issuing entity that issues the first security;
a face value paid to the issuing entity in exchange for possession of the first security;
a guaranteed rate that specifies an amount returned to a security holder by at least one third party involved in issuance of the first security if the issuing entity defaults and/or becomes unable to pay interest, wherein the guaranteed rate is expressed as a proportion relative to the face value;
an interest rate that specifies interest paid periodically to the security holder, wherein the interest rate is expressed as a proportion relative to the face value or to a guaranteed portion that is guaranteed with the guaranteed rate; and
a dividend that is to be distributed to the security holder after the new project funded through the first security begins to generate profit, wherein the dividend is at least a portion of the profit and paid on a non-guaranteed portion other than the guaranteed portion guaranteed with the guaranteed rate, and
the method comprising:
determining the interest rate and the dividend using the securities issuing computer;
receiving purchase order from an investor computer through a network using the securities issuing computer;
issuing the first security to an investor who purchases the first security using the securities issuing computer; and
converting the first security into a second security that differs from the first security in type using the securities issuing computer when a predetermined time has elapsed since the issuance of the first security.

21. A securities issuing system comprising:
a securities issuing computer configured to issue a first security for acquiring funds for a new project to construct a new infrastructure and a second security for acquiring funds for a repair project to repair an existing infrastructure, wherein
the first security includes:
a first issuing entity that issues the first security;
a first face value paid to the first issuing entity in exchange for possession of the first security;
a redemption limit of the first face value;
a first guaranteed rate that specifies an amount returned to a security holder by at least one third party involved in issuance of the first security if the first issuing entity defaults and/or becomes unable to pay interest, wherein the first guaranteed rate is expressed as a proportion relative to the first face value;
a first interest rate that specifies interest paid periodically to the security holder, wherein the first interest rate is expressed as a proportion relative to the first face value or to a guaranteed portion that is guaranteed with the first guaranteed rate; and
a first dividend that is to be distributed to the security holder after the new project funded through the first security begins to generate profit, wherein the first dividend is at least a portion of the profit and paid on a non-guaranteed portion other than the guaranteed portion guaranteed with the first guaranteed rate,
a redemption limit is not set for the second security,
the second security includes:
a second issuing entity that issues the second security;
a second face value paid to the second issuing entity in exchange for possession of the second security;
a second guaranteed rate that specifies an amount returned to the security holder by at least one third party involved in issuance of the second security if the second issuing entity defaults and/or becomes unable to pay interest, wherein the second guaranteed rate is expressed as a proportion relative to the second face value;
a second interest rate that specifies interest paid periodically to the security holder, wherein the second interest rate is expressed as a proportion relative to the second face value or to a guaranteed portion that is guaranteed with the second guaranteed rate; and
a second dividend that is to be distributed to the security holder after the repair project funded through the second security begins to generate profit, wherein the second dividend is at least a portion of the profit and paid on a non-guaranteed portion other than the guaranteed portion guaranteed with the second guaranteed rate,
the securities issuing computer includes a processing unit that is configured to determine the first interest rate and the first dividend, issue the first security, determine the second interest rate and the second dividend, and issue the second security, and
the processing unit is configured to issue the second security after the issuance of the first security.

22. The securities issuing system according to claim 21, wherein the processing unit is configured to issue, after the issuance of the first security, the second security that is used for a repair project of the infrastructure constructed in the new project.

23. The securities issuing system according to claim 21, wherein the processing unit is configured to:
assess, before the redemption limit of the first security is reached, whether to issue the first security or the second security as an additional security; and
issue the second security after the issuance of the first security if the processing unit determines to issue the second security.

24. The securities issuing system according to claim 23, wherein the processing unit is configured to issue the first security in place of or together with the second security after the issuance of the first security if the processing unit determines to issue the first security.

25. The securities issuing system according to claim 24, wherein the processing unit is configured to output, before the redemption limit of the first security is reached, a notification prompting entry of information required to assess whether to issue the first security or the second security as the additional security.

26. The securities issuing system according to claim 24, wherein the processing unit is configured to select the second security if an infrastructure that is repaired is a long-term or permanent facility.

27. The securities issuing system according to claim 24, wherein the processing unit is configured to select the first security if an infrastructure that is repaired is a short-term facility.

28. The securities issuing system according to claim 21, wherein the new project is a project to construct a transportation infrastructure that connects cities.

29. The securities issuing system according to claim 28, wherein the new project includes a project to construct an additional new city between the cities.

30. The securities issuing system according to claim 28, wherein
the securities issuing computer is configured to issue the first security for acquiring funds for the project to construct a new transportation infrastructure and additionally issue the first security for acquiring funds for a new project to construct an additional new city between the cities, and
the processing unit is configured to determine a first interest rate and a first dividend of the additional first security.

31. The securities issuing system according to claim 21, wherein
contents of the first security and/or second security and description of a project for which funds are acquired are presented in a TV shopping program, and
the securities issuing system includes a securities issuing unit that is configured to, when receiving purchase order data sent from a digital television receiver that shows the TV shopping program, issue the first security and/or the second security corresponding to the purchase order to an investor who is a viewer.

32. A method for acquiring funds for a new project to construct a new infrastructure by issuing a first security and acquiring funds for a repair project to repair an existing infrastructure by issuing a second security using a securities issuing computer, wherein
the first security includes:
a first issuing entity that issues the first security;
a first face value paid to the first issuing entity in exchange for possession of the first security;
a redemption limit of the first face value;
a first guaranteed rate that specifies an amount returned to a security holder by at least one third party involved in issuance of the first security if the first issuing entity defaults and/or becomes unable to pay interest, wherein the first guaranteed rate is expressed as a proportion relative to the first face value;
a first interest rate that specifies interest paid periodically to the security holder, wherein the first interest rate is expressed as a proportion relative to the first face value or to a guaranteed portion that is guaranteed with the first guaranteed rate; and
a first dividend that is to be distributed to the security holder after a project funded through the first security begins to generate profit, wherein the first dividend is at least a portion of the profit and paid on a non-guaranteed portion other than the guaranteed portion guaranteed with the first guaranteed rate,
a redemption limit is not set for the second security,
the second security includes:
a second issuing entity that issues the second security;
a second face value paid to the second issuing entity in exchange for possession of the second security;
a second guaranteed rate that specifies an amount returned to the security holder by at least one third party involved in issuance of the second security if the second issuing entity defaults and/or becomes unable to pay interest, wherein the second guaranteed rate is expressed as a proportion relative to the second face value;
a second interest rate that specifies interest paid periodically to the security holder, wherein the second interest rate is expressed as a proportion relative to the second face value or to a guaranteed portion that is guaranteed with the second guaranteed rate; and
a second dividend that is to be distributed to the security holder after a project funded through the second security begins to generate profit, wherein the second dividend is at least a portion of the profit and paid on a non-guaranteed portion other than the guaranteed portion guaranteed with the second guaranteed rate, and
the method comprising:
determining the first interest rate and the first dividend using the securities issuing computer;
receiving purchase order for the first security from a first investor computer through a network using the securities issuing computer;
issuing the first security to an investor who purchases the first security using the securities issuing computer;
determining the second interest rate and the second dividend using the securities issuing computer after the issuance of the first security;
receiving purchase order for the second security from a second investor computer through a network using the securities issuing computer; and
issuing the second security to an investor who purchases the second security using the securities issuing computer.
